# EUROPEAN PATENT SPECIFICATION

(11) **EP 1 914 953 B1**
(45) Date of publication and mention of the grant of the patent: **30.07.2014**
(21) Application number: 06022076.1
(22) Date of filing: 20.10.2006
(51) Int. Cl.: H04L 29/06, H04W 12/12, H04L 29/14, H04W 80/04, H04W 8/08

(54) **Care-of address registration and detection of spoofed binding cache entries**
Registrierung einer Care-of-Adresse und Erkennung von falschen Adressen im Bindungscache
Enregistrement de l'adresse temporaire d'un noeud mobile et détection d'usurpation d'adresse dans le cache d'association d'un noeud correspondant

(43) Date of publication of application: 23.04.2008
(73) Proprietor: Panasonic Intellectual Property Corporation of America, Torrance CA 90503 (US)
(72) Inventor: Weniger, Kilian, Dr., 63225 Langen (DE); Bachmann, Jens, 63225 Langen (DE)
(74) Representative: Grünecker, Kinkeldey, Stockmair & Schwanhäusser

(56) References cited:
- WO-A-2004/028053
- US-A1- 2002 166 071
- VOGT C: "Early Binding Updates for Mobile IPv6" IETF INTERNET DRAFT, 27 February 2006 (2006-02-27), XP015044682
- ZHAO F ET AL: "Extensions on Return Routability Test in MIP6" IETF STANDARD-WORKING-DRAFT, INTERNET ENGINEERING TASK FORCE, 21 February 2005 (2005-02-21), XP015039910
- JOHNSON D ET AL: "Mobility Support in IPv6 - RFC 3775" IETF STANDARD, INTERNET ENGINEERING TASK FORCE, June 2004 (2004-06), XP015009555
- HADDAD W ET AL: "Applying Cryptographically Generated Addresses to Optimize MIPv6 (CGA-OMIPv6)" 3 May 2005 (2005-05-03), IETF STANDARD-WORKING-DRAFT, INTERNET ENGINEERING TASK FORCE, IETF , XP015037911 * section 1 * * section 4.3 * * section 7 *
- VOGT C, ARKKO J: "A Taxonomy and Analysis of Enhancements to Mobile IPv6 Route Optimization" 5 May 2006 (2006-05-05), IETF STANDARD-WORKING-DRAFT, INTERNET ENGINEERING TASK FORCE, IETF , XP015045083 * section 2.3 * * section 2.4 * * section 3.10 * * section 3.11 *
- PERKINS C: "Securing Mobile IPv6 Route Optimization Using a Static Shared Key" 20 October 2005 (2005-10-20), IETF STANDARD-WORKING-DRAFT, INTERNET ENGINEERING TASK FORCE, IETF , XP015042533

## Description

### FIELD OF THE INVENTION

The invention relates to a method for detecting whether a binding cache entry for a mobile at a correspondent node has been spoofed. Further, the invention also relates to a method for registering a care-of address of a mobile node at a correspondent node. The invention also provides a mobile node and a correspondent node that participate in these methods and a mobile communication system comprising the mobile node and the correspondent node.

### TECHNICAL BACKGROUND

Mobile IPv6 (see D. Johnson, C. Perkins, J. Arkko, "Mobility Support in IPv6", IETF RFC 3775, June 2004, available at http://www.ietf.org ) is an IP-based mobility protocol that enables mobile nodes to move between subnets in a manner transparent for higher layers and applications, i.e. without breaking higher-layer connections. Therefore, a mobile node has two IP addresses configured: a Care-of-Address (CoA) and a Home Address (HoA). The mobile node's higher layers use the home address for communication with the communication partner (destination terminal), from now on called Corresponding Node (CN). This address does not change and serves the purpose of identification of the mobile node. Topologically, it belongs to the Home Network (HN) of the mobile node. In contrast, the care-of address changes on every movement resulting in a subnet change and is used as the locator for the routing infrastructure. Topologically, it belongs to the network the mobile node is currently visiting. One out of a set of Home Agents (HA) located on the home link maintains a mapping of the mobile node's care-of address to mobile node's home address and redirects incoming traffic for the mobile node to its current location. Reasons for having a set of home agents instead of a single home agent are redundancy and load balancing.

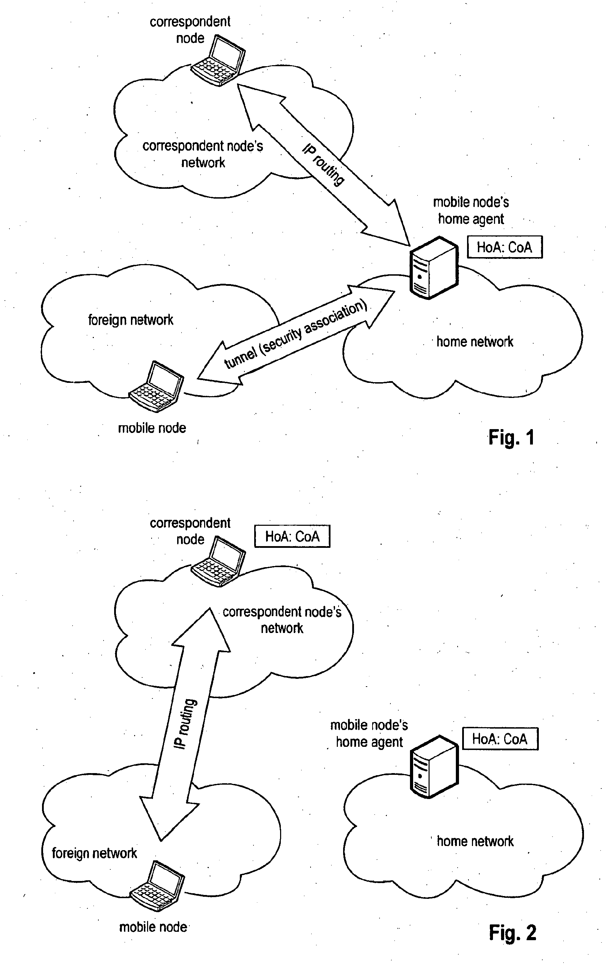

Mobile IPv6 currently defines two modes of operation: bi-directional tunneling and route optimization. Fig. 1 exemplifies the use of bi-directional tunneling. Data packets sent by the correspondent node and addressed to the home address of the mobile node are intercepted by the home agent in the home network and tunneled to care-of address of the mobile node. Data packets sent by the mobile node are reverse tunneled to the home agent, which decapsulates the packets and sends them to the correspondent node (reverse tunneling means that packets are transmitted by the mobile node via a tunnel that starts at the mobile node's care-of address and terminates at the home agent).

For this operation, only the home agent is informed about the care-of address of the mobile node. Therefore, the mobile node sends Binding Update (BU) messages to the home agent. These messages are sent over an IPsec security association and thus are authenticated and integrity protected. A drawback is that if the mobile node is far away from the home network and the correspondent node is close to the mobile node, the communication path is unnecessarily long, resulting in inefficient routing and high packet delays.

The route optimization mode can prevent the inefficiency of bi-directional tunneling mode by using the direct path between correspondent node and mobile node. The use of route optimization is exemplified in Fig. 2. The mobile node sends binding update messages to the correspondent node, which then is able to directly send data packets to the mobile node (a type 2 routing header is used to send the packets on the direct path). Of course, the correspondent node has to implement Mobile IPv6 route optimization support.

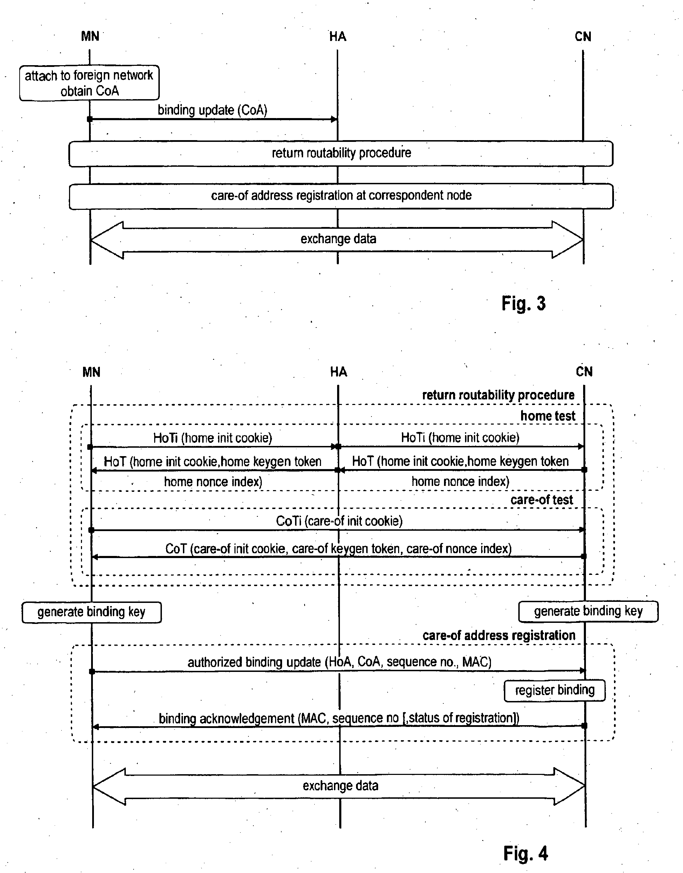

To authenticate the binding update message, the mobile node and the correspondent node perform a so-called return routability procedure (see Fig. 3), which tests the reachability of the mobile node at the home address and care-of address using a home address test and a care-of address test, respectively, and generates a shared session key. Subsequently, the mobile node may register its care-of address at the correspondent node utilizing the session key for authenticating its binding update sent to the correspondent node.

As shown in Fig. 4, a mobile node initiates the return routability procedure by sending a home test init message, which is reverse tunneled over the home agent. The home test init message contains a cookie to be able to map replies to requests. The correspondent node replies with so-called home test messages which contain a home cookie, a home nonce index and a home keygen token. The home keygen token is calculated with a keyed hash function from the home address and the home nonce. In parallel or subsequent to this exchange, the mobile node sends a care-of test init message on the direct path to the correspondent node. The care-of test init contains the care-of cookie and correspondent node replies with a care-of test message, which contains the care-of cookie, a care-of nonce index and a care-of keygen token, which is calculated with a keyed hash function from the care-of address and the care-of nonce. The key for the hash function and the nonce are only known by correspondent node. After mobile node has received both home test and care-of test messages, it calculates a binding key "kbm", which is the hash value of the concatenation of the keygen tokens in home test and care-of test messages. Next, the mobile node calculates an authenticator using a hash function keyed with the binding key. The authenticator is calculated over the binding update message, home address and care-of address and is appended to the binding update message. This authorized binding update message is finally sent to the correspondent node. If the verification is successful, correspondent node creates the binding of home address and care-of address in its binding cache and can send packets directly to mobile node's care-of address.

With respect to security, the design goal was to achieve a level comparable to IPv6, i.e., allow redirection of traffic only, if the attacker is on the path.

Multiple types of attacks against the return routability procedure and the route optimization mode are possible (see e.g. P. Nikander, J. Arkko, et al, "Mobile IP Version 6 Route Optimization Security Design Background", IETF RFC 4225, December 2005, available at http://www.ietf.org ). The two most important attacks which are possible if a bogus binding update message is falsely accepted by the correspondent node are
- Address stealing or impersonation attack an attacker tries to redirect the traffic destined for a victim to himself in order to eavesdrop or tamper the traffic or to drop them for denial of service. The victim can be a mobile node or any stationary node with a globally routable address.
- Flooding attack an attacker subscribes to a high-bandwidth service and redirects the incoming traffic to a victim for denial of service.

The following table gives an overview of possible combinations of addresses that an attacker could put in binding update messages, the consequences if the binding update is accepted by the correspondent node and possible countermeasures:
1) home address=victim's home address/address, care-of address=attacker's care-of address
   - Target: Address stealing/Impersonation attack for eavesdropping/tampering
   - Countermeasures: cryptographically generated address, home address test
2) home address=victim's home address/address, care-of address=non-existing care-of address
   - Target: Address stealing/Impersonation attack for denial of service
   - Countermeasures: cryptographically generated address, home address test
3) home address=Attacker's home address, care-of address=victim's care-of address
   - Target: Flooding attack
   - Countermeasures: credit-based binding acknowledgement, care-of address test
4) home address=Attacker's home address with victim's prefix, care-of address=attacker's care-of address
   - Target: Return-to-home flooding: attacker subscribes home address to high-bandwidth service and lets binding expire to redirect stream to victim's network for denial of service
   - Countermeasures: home address test

Due to the home address test (home test /home test init exchange), an attacker must be reachable at the claimed home address. Hence, only attackers on the path between the home agent and the correspondent node and attackers between the mobile node and the home agent can successfully complete attacks with the address combinations no 1, 2, and 4. If IPsec is used, the home test in the tunnel between mobile node and home agent should be encrypted (see J. Arkko, V. Devarapalli, F. Dupont, "Using IPsec to Protect Mobile IPv6 Signaling Between Mobile Nodes and Home Agents", IETF RFC 3776, June 2004, available at http://www.ietf.org ). In this case, an attacker must be on the path between home agent and correspondent node to successfully complete attack with the address combination no 1, 2, and 4. Due to the care-of address test (care-of test/care-of test init exchange), the attacker must be reachable at the claimed care-of address in order to successfully complete a flooding attack with the address combination no 3.

In summary, the attacker must be on the path to be able to redirect traffic using a bogus correspondent node registration. However, in contrast to IPv6 the attacker could only temporarily gain access to the path and continue the attack off-path. For instance, it could intercept the home test and subsequently leave the path between home agent and correspondent node to mount an impersonation attack with address combination no 1. This is called time shifting attack (see e.g. RFC 4225) and is mitigated by a short binding lifetime of 7 minutes, i.e., the attacker must at least move back on-path every 7 minutes to keep the bogus redirection active.

A drawback of the return routability procedure and route optimization mode is that latency and signaling overhead are significantly increased: upon every handover, at least 5 messages (incl. binding update message) must be exchanged and even if the mobile node is not moving, the procedure must be repeated every time the binding lifetime expires (i.e., after 7 minutes). Another drawback is that the procedure is not fully secure: it is based on the assumption that a node that was reachable at the claimed home address and care-of address within the last 7 minutes is not an attacker. A further drawback of the return routability procedure is that it depends on the home agent, which means that route optimized communication is not possible if the home agent is down, although the home agent would not be on the data path for route optimized traffic.

J. Arkko, C. Vogt, W. Haddad, "Applying Cryptographically Generated Addresses (CGA) and Credit-based Authorization (CBU) to Mobile IPv6", draft-arkko-mipshop-cga-cba-04.txt, June 2006 (available at http://www.ietf.org ) proposes two optimizations for route optimization mode. The first allows the mobile node to send an early binding update with a new, yet-unverified care-of address to improve handover delay, i.e., the care-of address test is done after the binding update has been sent and in parallel to sending data to the new care-of address. However, the correspondent node maintains a credit counter and is only allowed to send as many packets to this yet-unverified care-of address as it has sent to the previous care-of address. This "credit-based authorization" prevents amplification in redirection-based flooding attacks. The second optimization allows mobile node and correspondent node to skip almost all home address tests except of the initial home address test. This reduces signalling overhead and handover delay, but requires that the home address is a Cryptographically Generated Address (CGA) as for example proposed in T. Aura, "Cryptographically Generated Addresses (CGA)", RFC 3972, March 2005 (available at http://www.ietf.org ). A cryptographically generated address binds a public key to an IPv6 address (or, more specifically, it's interface identifier), which is a strong cryptographic address ownership proof for messages signed with the corresponding private key and makes impersonation attacks practically impossible. The initial home address test is only necessary to verify the prefix of the home cryptographically generated address and to prevent return-to-home flooding attacks (see J. Arkko, C. Vogt, W. Haddad, "Applying Cryptographically Generated Addresses (CGA) and Credit-based Authorization (CBU) to Mobile IPv6"). Due to these mechanisms, the binding lifetime at the correspondent node is allowed to be much higher than 7 minutes, i.e., the return routability procedure does not need to be repeated every 7 minutes.

However, the proposal has drawbacks: First, cryptographically generated addresses are based on public key cryptography and hence require public/private keys and some amount of computation and memory (for signing and verifying messages, and for generating cryptographically generated addresses), which might not be available at all mobile nodes or correspondent nodes. Furthermore, cryptographically generated addresses are not implemented in a large scale for various reasons.

Drawbacks of the Mobile IPv6 route optimization mode are its limited security compared to bi-directional tunneling mode and the high signaling and handover delay. The latter has negative impacts on delay-sensitive applications. This invention proposes mechanisms that can be used either to increase security of the route optimization mode and its variants, or to reduce signaling overhead and handover delay while keeping more or less the same security properties.

Another drawback is the dependency on the home agent and the inability to keep data session active when the home agent is down. This invention can reduce the dependency on the home agent and hence increase the tolerance against home agent crashes.

WO 2004/028053 A1 proposes a novel Care-of-Address Option (CAO) for use in an IPv6 packet header, which allows a mobile node to include its Home Address (HoA) as the source address and its Care-of Address (CoA) in the new header field referred to as the CAO field. When the CAO is present in the packet header, an access node in a foreign network performs ingress filtering on the address included in the CAO instead of the (home) address in the source address. Various flags may be included in the CAO field relating to security and/or processing operation to be performed by a receiving node. One further option is that the correspondent node (CN) reflects the CAO back to the mobile node in a destination header, which is allowing the mobile node to detect, whether the correspondent node has created an incorrect location (Inverse Binding Cache Entry) of the mobile node due to an attack. The Inverse Binding Cache Entry is thereby used for tracking the location of a mobile node, but not for routing, and may assist with a subsequent installation of Route Optimization between mobile node and correspondent node.

The IETF Internet Draft "Early Binding Updates for Mobile IPv6", by C. Vogt, February 2006 (draft-vogt-mobopts-simple-ebu-00.txt) aims to mitigate the problem of handover latency caused by the return-routability procedure for secure use of route optimization between unacquainted nodes within Mobile IPv6. The Internet Draft specifies extensions to Mobile IPv6 that eliminate the latency of the return-routability procedure. The extensions provide a basis for more efficient reactive as well as proactive handoff management and are fully backward-compatible.

### SUMMARY OF THE INVENTION

One object of the invention is to enable a mobile node and/or correspondent node to detect spoofed binding cache entries at the correspondent node.

At least one object is solved by the subject matter of the independent claims. Advantageous embodiments are subject to the dependent claims.

One of the aspects of the invention is to suggest mechanisms that allow for the detection of a spoofed binding cache entry for a mobile node at a correspondent node. As will be outlined below one solution may be to send a binding acknowledgement for a binding update to the mobile nodes home address and/or its previously registered care-of address. Further, the correspondent node may optionally send a further binding acknowledgement to the new registered care-of address. In the latter example, if the correspondent node does not only send the binding acknowledgment to the new (potentially spoofed) care-of address but also to the previously registered care-of address of the mobile node and/or its home address, the mobile terminal may detect an attack on its binding, for example by recognizing that a binding acknowledgement is received for a binding update that has not been sent by the mobile terminal.

Another option to detect a spoofed binding cache entry of a mobile node may be a binding test in which the correspondent node sends one or more requested/solicited or unsolicited probe messages to the mobile node. These probe messages may allow the mobile node to check/detect whether its binding cache entry at the correspondent node is (still) correct.

In addition an authorized care-of address registration mechanism may be used to reduce the signaling overhead and/or to allow for the authorized registration of a care-of address at a correspondent node, even in cases where the mobile node's home agent is down. The proposed mechanism may be advantageous in that it does not require cryptographically generated address to be used by mobile node and correspondent node. According to this aspect, a so-called permanent token (or permanent keygen token) is used for the authentication of binding updates. Different embodiments also discuss how such permanent token may be generated at mobile node and correspondent node and when and how to update the permanent token, for example in response to the detection of an attack on the mobile node's binding at the correspondent node.

According to one embodiment of the invention, a method for detecting whether a binding cache entry for a mobile at a correspondent node has been spoofed is provided. In this embodiment, it is assumed that the mobile node has at least one home address in its home network and at least one care-of address in a foreign network. In this embodiment the correspondent node transmits at least one binding acknowledgement to the mobile node in response to receiving an authorized binding update. One binding acknowledgement is thereby destined to the mobile node's home address in its home network. Alternatively (or in addition to sending the binding update to the mobile node's home address) the correspondent node may also destine one biding acknowledgment to the care-of address that has been deregistered by the authorized binding update. The mobile node receives at the least one binding acknowledgment and may detect whether a binding cache entry at the correspondent node for the mobile has been spoofed based on the at least one received binding acknowledgment.

According to another embodiment of the proposed method, the correspondent node may destine a further binding acknowledgment to the new care-of address provided in the authorized binding update.

In one embodiment, it is determined whether the binding cache entry for the mobile node at the correspondent node is spoofed by determining at the mobile node, whether the at least one binding acknowledgment is received for an authorized binding update that has been transmitted by the mobile node.

In another embodiment, it is determined whether the binding cache entry for the mobile node at the correspondent node is spoofed by determining at the mobile node, whether a sequence number in the at least one received binding acknowledgment matches a sequence number of an unacknowledged authorized binding update.

In another embodiment, it is further detected at the mobile node that the home agent at which the mobile node is registered is down. If so, the mobile node may inform the correspondent node on the home agent being down.

Another embodiment of the invention relates to a method for detecting whether a binding cache entry for a mobile at a correspondent node has been spoofed. In this embodiment, the mobile node has at least one care-of address in a foreign network. The mobile node and the correspondent node perform a binding test. This binding test may include the transmission of binding test messages from the transmitting the correspondent node to the mobile node using the mobile node's care-of address. A spoofed binding cache entry at the correspondent node may be detected based on the binding test.

The mobile node detects that a binding cache entry for the mobile node at the correspondent node has been spoofed, if the mobile node does not receive a binding test message from the correspondent node for a threshold time period.

In another variation of the embodiment, the binding test messages may be unsolicited messages sent by the correspondent node. Further, it may also be foreseen that the binding test messages are transmitted periodically.

In a further embodiment of the invention the binding test messages are transmitted by the correspondent node in case the correspondent node has - e.g. temporarily - no data packets to transmit to the mobile node.

In another embodiment of the invention, the binding test further comprises sending at least one binding test request message from the mobile node to the correspondent node for requesting the correspondent node to transmit the binding test messages. In a variation of this embodiment, spoofed binding cache entry at the correspondent node may be detected by the mobile node, if no response to one or more probe messages is received by the mobile node from the correspondent node. In another variation of this embodiment, the binding test utilizes messages of the ICMP protocol, such as for example an ICMP echo request and/or an ICMP echo response message.

In another embodiment of the invention, the binding test message(s) is a binding acknowledgment message(s).

Another embodiment of the invention further relates to performing counter measures to a detected attack on the mobile terminal's binding. For example, the mobile node may perform at least one of the following counter measures in response to detecting a spoofed binding cache entry at the correspondent node.

One possible counter measure is to perform a return routability procedure with the correspondent node. This procedure may provide the mobile node with cryptographic information. Subsequent to the return routability procedure the mobile terminal may then transmit an authorized binding update to the correspondent node to correct the spoofed binding cache entry. Thereby, the authorized binding update is authenticated by using the cryptographic information obtained by performing the return routability procedure. Optionally, a permanent keygen token may be determined by mobile node and correspondent node as part of the return routability procedure.

Another possible counter measure may be that the mobile node informs the correspondent node on the spoofed binding cache entry.

A further counter measure is to not/no longer use route optimization in exchanging data between mobile node and correspondent node. According to an exemplary embodiment of the invention this may include that all date exchanged between mobile node and correspondent node upon having detected the attack on the mobile node's binding are transmitted through the mobile node's home network. As a consequence, the correspondent would no longer has a binding cache entry for the mobile node which would ultimately prevent potential attacking nodes from spoofing a mobile node's binding cache entry at the correspondent node.

In case the correspondent node is informed on the spoofed binding cache entry, it is suggested that, according to another embodiment of the invention, the correspondent node blocks further binding updates for registering the care-of address in the spoofed binding cache entry and/or blocks further binding updates for registering a care-of address having a prefix equal or similar to that of the care-of address in the spoofed binding cache entry. This may have the advantage that the attacking node from its current position may be prevented to launch further attacks on the binding cache entries at the correspondent node.

In another embodiment, the home agent of the mobile node may authenticate a message that is transmitted from the mobile node via the home agent to the correspondent node for informing the correspondent node on the spoofed binding cache entry.

In a further embodiment of the invention the mobile node determines a message authentication code based on at least a permanent keygen token known to the mobile node and the correspondent node. Further, the mobile node may include this message authentication code to an authorized binding update that is to be transmitted to the correspondent node. This authorized binding update may further comprise a flag that, when set, indicates to the correspondent node to validate the message authentication code based on the permanent keygen token. The use of a permanent keygen token may for example allow for skipping a home-address test in a return routability procedure, which may be *inter alia* advantageous if the home agent serving the mobile node in its home network associated to the mobile node's home address is not responding or is down.

The generation of message authentication code may for example be implemented as follows. The correspondent node may send a message comprising a care-of keygen token to the mobile node. This message may be destined to the mobile node's care-of address currently registered with the correspondent node. Having received this message, the mobile node may determine the message authentication code based on at least the permanent keygen token and using the care-of keygen token.

In another embodiment, the mobile node sends an authorized binding update to the correspondent node for registering a care-of address for the mobile node at the correspondent node. This authorized binding update may comprise a message authentication code and a flag that, when set, indicates to the correspondent node to determine a permanent keygen token.

Generally, the permanent keygen token may be of finite or in some cases also of infinite validity.

According to one embodiment of the invention, the permanent keygen token determined by the correspondent node is identical to a permanent keygen token determined by the mobile node.

Another embodiment of the invention relates to the determination of the permanent keygen token. Its determination may for example be based on at least one of a home keygen token being a keygen token provided to the mobile node in a message from the correspondent node destined to the mobile node's home address, and/or a care-of keygen token being a keygen token provided to the mobile node in a message from the correspondent node destined to the mobile node's care-of address.

In one exemplary embodiment, the determination of the permanent keygen token is based on at least one keygen token provided by the correspondent node in a home address test and/or care-of address test of a return routability procedure.

As previously mentioned, the mobile terminal may generate a message authentication code. According to one exemplary embodiment, the mobile node determines the message authentication code based on at least one of a home keygen token being a keygen token provided to the mobile node in a message from the correspondent node destined to the mobile node's home address, and a care-of keygen token being a keygen token provided to the mobile node in a message from the correspondent node destined to the mobile node's care-of address.

As should have become apparent, it is thus foreseen in different embodiments of the invention that a permanent keygen token is determined by the mobile node and/or the correspondent node.

In one further exemplary embodiment, the mobile node may determine the permanent keygen token in response to receiving at least one binding acknowledgment for an authorized binding update from the mobile node.

In another exemplary embodiment, the permanent keygen token is determined at the correspondent node in response to receiving an authorized binding update from the mobile node. The authorized binding update in response to which the permanent keygen token is determined according to this embodiment may for example comprise a flag that, when set, indicates to the correspondent node to determine a permanent keygen token.

According to a further embodiment the mobile node and the correspondent node may perform a care-of address test thereby providing a care-of keygen token to the mobile node. Further, the mobile node may transmit an authorized binding update from to the correspondent node, wherein the authorized binding update comprises a message authentication code determined by the mobile terminal based on the care-of keygen token and a permanent keygen token known to the mobile node and the correspondent node.

For example, the permanent keygen token could be (or could be generated based on) a home keygen token provided to the mobile terminal in the last successful home address test prior to the home agent going down.

In a further embodiment, the correspondent node transmits at least one binding acknowledgement for the authorized binding update to the mobile node. The correspondent node may destine this at least one binding acknowledgment may be destined to the care-of address deregistered by the authorized binding update.

In a variation, the correspondent node may destine the at least one binding acknowledgment to the care-of address deregistered by the authorized binding update (only) in cases where the correspondent node detects or is informed by the mobile node that the home agent is down.

In another embodiment, several mechanisms for detecting an unreachable home agent are suggested. The home agent may be considered or detected being down (or unreachable) by either one or a combination of the following mechanisms. One option would be to detect at the mobile node that no binding acknowledgement is received at the mobile node for an authorized binding update transmitted by the mobile node to the home agent. Another option is the use of the IPsec Dead Peer Detection procedure for this purpose. A further option suggested herein is to detect by the mobile node or the correspondent node that no response to one or more probe messages sent to the home agent or to a home address of the mobile terminal registered at this home agent is received.

In another embodiment, the correspondent node may be informed by the mobile node that the home agent where the mobile node is registered is down by sending a notification message from the mobile node to the correspondent node.

It may be advantageous that the notification message is authenticated by the mobile node. For authentication of the notification a binding management key that has been previously determined in a return routability procedure including a home address test and a care-of address test could be used.

Moreover, another option may be that the notification is sent as part of an authorized binding update transmitted by the mobile node to the correspondent node.

Furthermore, in another embodiment registering a care-of address of a mobile node at a correspondent node according to the different embodiments described above may further include the steps of the method for detecting whether a binding cache entry for a mobile at a correspondent node has been spoofed according to the different embodiments of the invention described herein.

Another embodiment relates to a mobile node for detecting whether a binding cache entry for the mobile node at a correspondent node has been spoofed. The mobile node is assigned at least one home address in its home network and at least one care-of address in a foreign network. According to this exemplary embodiment, the mobile node comprises a receiver for receiving at least one acknowledgement sent by the correspondent node. The correspondent node have destined one binding acknowledgement to the mobile node's home address in its home network, and/or one to the care-of address deregistered by the authorized binding update. Further, the mobile node may have a processing unit for detecting whether a binding cache entry at the correspondent node for the mobile has been spoofed based on the at least one received binding acknowledgment.

In another embodiment, mobile node may comprise means adapted to perform or to participate in the steps of any method for detecting whether a binding cache entry for a mobile at a correspondent node has been spoofed and/or the method for method for registering a care-of address of a mobile node at a correspondent node according to one of the various embodiments described herein.

A further embodiment of the invention relates to a correspondent node for maintaining a binding cache entry for a mobile node. As in other embodiment, it may be assumed that the mobile node is assigned at least one home address in its home network and at least one care-of address in a foreign network. The correspondent node may comprise a communication unit (e.g. including a transmitter) for transmitting in response to receiving an authorized binding update, at least one binding acknowledgement to the mobile node. Thereby the correspondent node destines one binding acknowledgement to the mobile node's home address in its home network and/or the care-of address deregistered from the correspondent node's binding cache by the authorized binding update.

In another embodiment, the correspondent node comprises means adapted to perform or to participate in the steps of the method for detecting whether a binding cache entry for a mobile at a correspondent node has been spoofed and to register a care-of address of a mobile node at a correspondent node according to one of the various embodiments described herein.

A further embodiment of the invention relates to another mobile node for detecting whether a binding cache entry for the mobile node at a correspondent node has been spoofed. Here, the mobile node may be assigned at least one care-of address in a foreign network. The mobile node according to this embodiment may comprise a communication means for performing a binding test including receiving from the correspondent node binding test messages destined to the mobile node's care-of address. Further, the terminal may include a processing unit for detecting a spoofed binding cache entry at the correspondent node based on the binding test.

Another embodiment of the invention provides a further correspondent node for maintaining a binding cache entry for a mobile node. Also here the mobile node may be assigned at least one care-of address in a foreign network. The correspondent node according to this exemplary embodiment may include a receiver for receiving at least one binding test request message from the mobile node as part of a binding test and a transmitter for transmitting binding test messages destined to the mobile node's care-of address in response to the at least one binding test request message as part of the binding test.

An even further embodiment relates to a mobile node for registering a care-of address at a correspondent node comprising a communication unit for performing by the mobile node and the correspondent node a care-of address test thereby providing a care-of keygen token to the mobile node. Moreover, this communication unit might be operable to transmit an authorized binding update from the mobile node to the mobile node. This authorized binding update could comprise a message authentication code determined by the mobile terminal based on the care-of keygen token and a permanent keygen token known to the mobile node and the correspondent node.

Another correspondent node according to a further embodiment may be used in registering a care-of address for a mobile node. This correspondent node could comprise a communication unit for performing by the mobile node and the correspondent node a care-of address test thereby providing a care-of keygen token to the mobile node. The communication unit may for example be operable to receive an authorized binding update from the mobile node to the mobile node, wherein the authorized binding update comprises a message authentication code determined by the mobile terminal based on the care-of keygen token and a permanent keygen token known to the mobile node and the correspondent node.

Moreover, another embodiment of the invention relates to a mobile communication system comprising a mobile node and/or a correspondent node according one of the various embodiments of the invention described herein.

Another aspect of the invention is to provide a computer readable medium storing instructions that, when executed by a processor of a mobile node, cause the mobile node to detect whether a binding cache entry for the mobile node at a correspondent node has been spoofed. According to one exemplary embodiment, the mobile node is assigned at least one home address in its home network and at least one care-of address in a foreign network. The instructions stored on the computer-readable medium according to this embodiment of the invention - when executed by the processing unit of the mobile node - cause the mobile node to receive at least one of at least one binding acknowledgement sent by the correspondent node. One binding acknowledgement has been destined to the mobile node's home address in its home network and/ore one binding acknowledgement has been destined to the care-of address deregistered by the authorized binding update. Further, the instructions may cause the mobile node detecting whether a binding cache entry at the correspondent node for the mobile has been spoofed based on the at least one received binding update.

Another embodiment of the invention provides a computer readable medium storing instructions that, when executed by a processor of a correspondent node, cause the correspondent node to maintain a binding cache entry for a mobile node, wherein the mobile node is assigned at least one home address in its home network and at least one care-of address in a foreign network. This may be achieved by causing the corresponding node to transmit in response to receiving an authorized binding update, at least one binding acknowledgement to the mobile node, wherein one binding acknowledgement is destined to the mobile node's home address in its home network and/or one binding acknowledgement is destined to the mobile node's care-of address that is deregistered by the authorized binding update.

A further computer readable medium according to another embodiment of the invention is storing instructions that, when executed by a processor of a mobile node, cause the mobile node to detect whether a binding cache entry for the mobile node at a correspondent node has been spoofed, wherein the mobile node is assigned at least one care-of address in a foreign network, by performing a binding test including receiving from the correspondent node binding test messages destined to the mobile node's care-of address, and detecting a spoofed binding cache entry at the correspondent node based on the binding test.

Another computer readable medium according to another embodiment is storing instructions that, when executed by a processor of a correspondent node, cause the correspondent node to maintain a binding cache entry for a mobile node, wherein the mobile node is assigned at least one care-of address in a foreign network, by receiving at least one binding test request message from the mobile node as part of a binding test and transmitting binding test messages destined to the mobile node's care-of address in response to the at least one binding test request message as part of the binding test.

A further embodiment provides a computer readable medium storing instructions that, when executed by a processor of a mobile node, cause the mobile node to register a care-of address at a correspondent node, by performing by the mobile node and the correspondent node a care-of address test thereby providing a care-of keygen token to the mobile node, and transmitting an authorized binding update from the mobile node to the mobile node, wherein the authorized binding update comprises a message authentication code determined by the mobile terminal based on the care-of keygen token and a permanent keygen token known to the mobile node and the correspondent node.

An even further embodiment relates to a computer readable medium storing instructions that, when executed by a processor of a correspondent node, cause the correspondent node to register a care-of address for a mobile node, by performing by the mobile node and the correspondent node a care-of address test thereby providing a care-of keygen token to the mobile node, and receiving an authorized binding update from the mobile node to the mobile node, wherein the authorized binding update comprises a message authentication code determined by the mobile terminal based on the care-of keygen token and a permanent keygen token known to the mobile node and the correspondent node.

Another embodiment of the invention provides a computer readable medium storing instructions that, when executed by the processor of a mobile node or correspondent node, cause the mobile node or correspondent node, respectively, to perform or to participate in the steps of the method for detecting whether a binding cache entry for a mobile at a correspondent node has been spoofed and to register a care-of address of a mobile node at a correspondent node according to one of the various embodiments described herein.

### BRIEF DESCRIPTION OF THE FIGURES

In the following the invention is described in more detail in reference to the attached figures and drawings. Similar or corresponding details in the figures are marked with the same reference numerals.
- **Fig. 1**: exemplifies the use of bi-directional tunneling for a communication between a mobile node and a correspondent node according to MIPv6,
- **Fig. 2**: exemplifies the use of route optimization for a communication between a mobile node and a correspondent node according to MIPv6,
- **Fig. 3**: shows the actions performed by a mobile node upon obtaining a new care- of address in a foreign network according to MIPv6,
- **Fig. 4**: shows a return routability procedure and a care-of address registration performed by a mobile node and a correspondent according to MIPv6,
- **Fig. 5**: shows an exemplary sequence of messages exchanged between an attacker, a mobile node, a correspondent node and a home agent allowing the mobile node to detect an attack on its binding at the correspondent node based on binding acknowledgement sent via the mobile node's home network according to an exemplary embodiment of the invention,
- **Fig. 6**: shows an exemplary sequence of messages exchanged between an attacker, a mobile node, a correspondent node and a home agent allowing the mobile node to detect an attack on its binding at the correspondent node based on a binding test according to an exemplary embodiment of the invention,
- **Fig. 7**: shows an exemplary sequence of messages exchanged between a mobile node, a correspondent node and a home agent according to an improved return routability procedure and subsequent care-of address registration according to an exemplary embodiment of the invention,
- **Fig. 8**: Fig. 8 shows a sequence of steps and messages exchanged between a mobile node and a correspondent node for registering a care-of address of the correspondent node according to an exemplary embodiment of the invention where a permanent token is used for authentication,
- **Fig. 9**: shows another sequence of steps and messages exchanged between a mobile node, home agent and a correspondent node for registering a care- of address of the correspondent node according to an exemplary embodiment of the invention where a permanent token is used for authentication, and
- **Fig. 10**: shows a further sequence of steps and messages exchanged between a mobile node, attacker, home agent and a correspondent node according to an exemplary embodiment of the invention where a permanent token is used for authentication and where a mobile node detects that the attacker has spoofed its binding cache entry the correspondent node.

### DETAILED DESCRIPTION OF THE INVENTION

The following paragraphs will describe various embodiments of the invention. For exemplary purposes only, most of the embodiments are outlined in relation to an a communication network using MIPv6 as discussed in the Background Art section above, but the invention is not limited to its use in this particular exemplary communication network.

Accordingly, also the terminology used herein mainly bases on the terminology used by the IETF in the standardization of Mobile IPv6. However, the terminology and the description of the embodiments with respect to and Mobile IPv6 is not intended to limit the principles and ideas of the inventions to such systems and the use of this protocol only.

The explanations given in the Technical Background section above are intended to better understand the specific exemplary embodiments described herein and should not be understood as limiting the invention to the described specific implementations of processes and functions in the mobile communication network. Nevertheless, the improvements proposed herein may be readily applied in the protocols/systems described in the Technological Background section and may in some embodiments of the invention also make use of standard and improved procedures of theses protocols/systems.

### Definitions

In the following a definition of several terms frequently used in this document will be provided.

A correspondent node or mobile node is a physical entity within a communication network. One node may have several functional entities. A functional entity refers to a software or hardware module that implements and/or offers a predetermined set of functions to other functional entities of a node or the network. Nodes may have one or more interfaces that attach the node to a communication facility or medium over which nodes can communicate. Similarly, a network entity may have a logical interface attaching the functional entity to a communication facility or medium over it may communicate with other functional entities or nodes.

An address of a node or functional entity is a global or site-local identifier of the node or functional entity being either of permanent or temporarily limited validity. Typically, in some of the embodiments herein an address is a network layer address, i.e. is used for identification of nodes and network entities on the network layer of the OSI reference model (see for example the textbook "Computer Networks", by Andrew S. Tanenbaum, fourth edition, 2003, Prentice Hall PTR, chapter 1.4 incorporated herein by reference). The network layer or Layer 3 typically provides the functional and procedural means for transferring variable length packets from a source to a destination via one or more networks.

Typically, an interface of a node is assigned one address. However, would also be possible to assign multiple addresses to a single interface. Further, in case of a node comprising plural functional entities, one or more addresses may be associated to a logical interface of a respective functional entity.

Generally, each network is identified by at least one number e.g. a so-called prefix. This number allows for routing of packets to the nodes in the network. Furthermore, this number refers to a pool of identifiers that can be used by the nodes in the network. An address in a network is an identifier out of the pool of identifiers. For example in IPv6, the number of a network is the IPv6 prefix and the address in a network is the IPv6 address composed of the IPv6 prefix and an IPv6 host part. In different networks, for example in a home network and a foreign network different addresses are used.

A home network of a mobile node is typically identified by the location of the home agent at which the mobile node registers its care-of address(es) for a given home address of the mobile node.

A home address is an address assigned to a mobile node, used as the permanent address of the mobile node. This address is defined within the mobile node's home network. A mobile node may have multiple home addresses, for instance when there are multiple home networks or a mobile node may have multiple home addresses in a single home network.

A care-of address is an address associated with a mobile node while visiting a foreign network. A mobile node may have one or more care-of addresses simultaneously.

A binding is an association of the home address of a mobile node with a care-of address for that mobile node. In some embodiments of the invention the remaining lifetime of that association may also be part of the binding. Bindings are generated by way of registration which denotes a process during which a mobile node or a proxy sends a binding update to the mobile node's home agent or a correspondent node, causing a binding for the mobile node to be registered. The bindings may for example be stored in a binding cache of the mobile node's home agent or a correspondent node, respectively. An authorized binding update is a message for registering a binding. The registration of the binding is authorized by authenticating the sender of the authorized binding update, e.g. by means of a message authentication code (MAC) or another authentication mechanism (e.g. signing the binding update by means a public/private key pair).

In some embodiments of the invention the IPv6 protocol is used on the network layer. In this case the address is an identifier for a single (logical) interface of a node such that a packet sent to it from another IPv6 subnet is delivered via a lower-layer link to the (logical) interface identified by that address.

A home agent is a router or a functional entity providing a routing function on a mobile node's home network with which the mobile node registers its current care-of address(es). While the mobile node is away from home, the home agent may intercept packets on the home link destined to the mobile node's home address, encapsulate them, and tunnel them to one of or a some of the mobile node's registered care-of address(es).

If route optimization is used a mobile node and a correspondent node exchange data packets directly without passing same through the mobile node's home network. Instead the correspondent node sends data packets to the mobile node's care-of address registered in the correspondent node's binding cache. Similar, also the mobile node does not transmit the data packets to the corresponding node through its home network (i.e. via the home agent) but destines the data packets directly to an address of the correspondent node.

A security association may be defined as a set of security information that two nodes or functional entities share in order to support secure communication. For example, a security association may include a data encryption algorithm, data encryption key(s) (e.g. a secret key or a public/private key pair, initialization vector(s), digital certificates, etc. Typically, there is a security association provided between a mobile node in a foreign network and its home agent in the home network. Thus, even if the mobile node is attached to a foreign network, encrypted and/or authenticated/authorized communication between the home agent and the mobile node (e.g. through a secured tunnel) may be ensured.

A token is cryptographic information that may be used in security related functions and procedures. By means of one or more tokens the mobile node and the correspondent node may achieve an authorized communication of messages e.g. relating to the registration of a binding for the mobile node at the correspondent node. Tokens may for example be generated using random numbers, so called nonces. One or more tokens may be combined to form a new token.

A keygen token may be a number supplied by a correspondent node in the return routability procedure to enable the mobile node to compute the necessary binding management key for authorizing a Binding Update. Accordingly, a care-of keygen token is a keygen token sent by the correspondent node in the care-of test, while a home keygen token denotes a keygen token sent by the correspondent node in the home test.

A binding management key (Kbm) is a key used for authorizing a binding cache management message (e.g., Binding Update or Binding Acknowledgement). Return routability provides a way to create a binding management key.

Nonces are typically used internally by the correspondent node in the creation of keygen tokens related to the return routability procedure. The nonces are not specific to a mobile node, and are kept secret within the correspondent node. A nonce index is used to indicate which nonces have been used when creating keygen token values, without revealing the nonces themselves.

A cookie is a random number used by a mobile node to prevent spoofing by a bogus correspondent node in the return routability procedure. A care-of init cookie is a cookie sent to the correspondent node in the care-of test init message. This care-of init cookie may be returned in the care-of test message so as to allow the mobile node checking the authenticity of the response. Similarly, a home init cookie is a cookie sent to the correspondent node in the home test Init message, to be returned in the home test message.

A registration of a care-of address is a process during which a mobile node sends a binding update to its home agent or a correspondent node, causing a binding for the mobile node to be registered. The return routability procedure may precede a registration and may be used to authorize the subsequent registration by the use of a cryptographic token exchange.

Typically, the binding update being authorized is referred to as an authorized binding update. Generally, an authorized binding update may be considered a binding update comprising some cryptographic information such as a message authentication code for authenticating the binding update. As indicated above, the authorized binding update may comprise a message authentication code that may be for example generated based on the cryptographic information exchanged between a correspondent node and a mobile node in a return routability procedure.

In general, the use of a message authentication code incorporated to a message may provide a way to check the integrity of information transmitted over or stored in an unreliable medium, such a s a communication path or connection. Typically, mechanisms that provide such integrity check based on a secret key are usually called message authentication codes (MAC). Typically, message authentication codes are used between two parties that share a secret key in order to validate information transmitted between these parties. MAC mechanisms may be for example based on cryptographic hash functions (e.g. MD5 and SHA1). Furthermore, the secret key employed may be cryptographic information that may for example also be generated using a cryptographic hash function. Details on cryptographic hash function used in an embodiment of the invention may for example be found in H. Krawczyk et al., "HMAC: Keyed-Hashing for Message Authentication", IETF RFC 2104, February 1997, available at http://www.ietf.org .

A return routability is a procedure including an exchange of cryptographic information between a mobile node and a correspondent node based subsequently exchanged messages can be authorized. In one embodiment the return routability procedure is similar to the MIPv6 return routability procedure in that it comprises a home test and a care-of test providing the mobile node with two tokens (denoted home keygen token and a care-of keygen token) for authenticating a subsequent binding update of the mobile node. However, as will become apparent from the following sections, in some embodiments of the invention this procedure is changed, so that no home test is required (or in other words the home test could be "skipped"). Further, in other embodiments, no return routability procedure is required for the authentication of a binding acknowledgment.

As already indicated above, one aspect of the invention is to enable a mobile node to detect when its binding cache entry at the correspondent node has been spoofed. The detection of a spoofed binding cache entry for the mobile node at the correspondent node may for example allow for undertaking countermeasures immediately so as to revoke the effects of the attack (for example repairing the binding at the correspondent node).

Multiple mechanisms to detect attacks on a mobile node's binding will be outlined herein. In one embodiment, the detection mechanism includes the correspondent node sending multiple binding acknowledgements to different addresses of the mobile node after receiving an authorized binding update. In addition to or instead of sending the binding acknowledgement to the mobile node's new care-of address, the correspondent node may send a binding acknowledgement to mobile node's home address and/or to the old care-of address. Consequently, the mobile node would receive a binding acknowledgement although it may not have sent the corresponding binding update, which can be interpreted by the mobile node as a successful attack on its binding entry in the correspondent node. In one exemplary embodiment, the mobile node may stay connected/attached to the network where its care-of address deregistered by the authorized binding update is defined to receive the binding acknowledgement destined to this care-of address before (optionally) detaching therefrom.

In another embodiment, the detection mechanism includes the mobile node checking the correctness of the binding entry in the correspondent node using a binding test. This test could for example include sending one or more binding test messages to the correspondent node. The binding test messages may require a reply from the correspondent node (e.g. similar to an ICMP echo request/response). The mobile node may for example send these binding test messages once, periodically or occasionally, e.g. when no data has been received by the correspondent node for a certain amount of time. The binding test messages may be for example tunneled via the mobile node's home agent, so that they have mobile node's home address as source address and the correspondent node must use the binding cache entry for the reply. If no reply is received after sending multiple test messages the mobile node may interpret the missing response as an indication for a successful attack on its binding at the correspondent node.

In a further embodiment of the invention, the detection of a spoofed binding cache entry at the correspondent node may comprise the correspondent node sending unsolicited probe messages to the current care-of address of the mobile node. The probe messages may for example be sent by the correspondent node to the mobile node for a certain amount of time, periodically or occasionally. A probe message may for example be a binding acknowledgement message. If no data and/or no binding acknowledgements are received for multiple time periods, the mobile node could interpret this as an indication for a successful attack on its binding cache entry at the correspondent node.

Those detection mechanisms may be used in addition to existing binding procedures to make them more secure or it can be used to optimize the binding procedure in a way that reduces signaling overhead and handover delay at the cost of not preventing all attacks in the first place. However, a decrease of security is prevented, since the mobile node may be able to detect the attack and undertake actions immediately to revoke the effects of the attack. Further, the different detection mechanism can be employed individually or in arbitrary combination.

Another aspect of the invention relates to an optimization of the return routability procedure and route optimization mode so that for example no cryptographically generated addresses are required. In one embodiment, home test may be executed by the mobile node and correspondent node only initially and the home keygen token is reused in subsequent optimistic return routability rounds, i.e. the home test (HoT/HoTi exchange) is skipped. This may reduce signaling overhead and handover delay, but facilitates time shifting attacks on a mobile node's binding at a correspondent node. However, this drawback may for example be compensated by the mobile node detecting attacks using one of the different mechanisms described herein. In response to detecting an attack, the mobile terminal may for example initiate a full return routability procedure (incl. home test /home test init exchange) to repair the binding immediately and to generate a new home keygen token.

As indicated above, according to an embodiment of the invention an attacker spoofing a binding cache entry of a mobile node may be detected based on the correspondent node sending multiple binding acknowledgements to different addresses of the mobile node after receiving an authorized binding update. For example in addition to sending a binding acknowledgement to the mobile node's new care-of address, correspondent node sends a binding acknowledgement to mobile node's home address and/or optionally to the old care-of address.

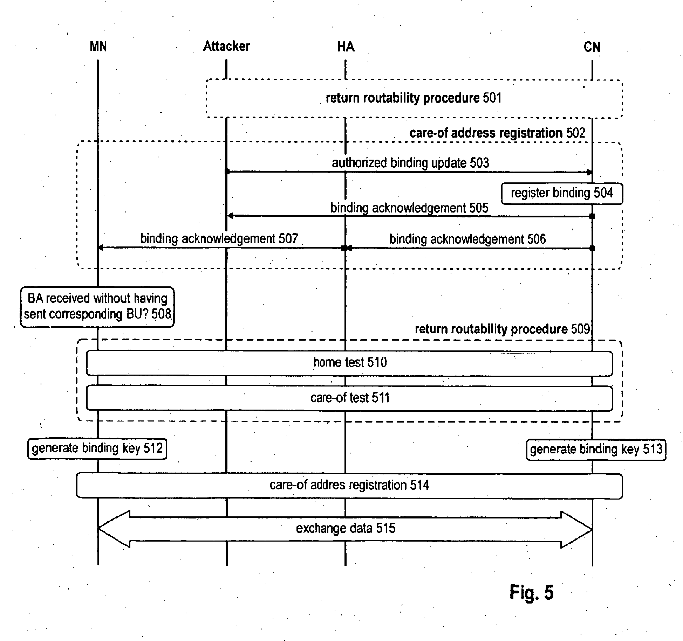

Fig. 5 shows an exemplary sequence of messages exchanged between an attacker, a mobile node, a correspondent node and a home agent allowing the mobile node to detect an attack on its binding at the correspondent node based on binding acknowledgement sent via the mobile node's home network according to an exemplary embodiment of the invention. For exemplary purposes it is assumed that mobile node and correspondent node use route optimization for exchanging data packets.

For exemplary purposes only it is further assumed that the attacker performs an address stealing/Impersonation attack for example to eavesdrop or tamper the data destined to the mobile node. The attacker may thus manage to perform 501 a return routability procedure and a subsequent care-of address registration procedure 502 with the correspondent node (CN). Upon having obtained the relevant cryptographic information for authenticating a binding update as a result of the return routability procedure, the attacker may subsequently transmit 505 a binding update to the correspondent node to register for example its own address as a care-of address for the mobile node to redirect the traffic destined to the mobile node's care-of address to itself. As the attacker is capable of validly authenticating the binding update (e.g. by including a message authentication code determined based on the cryptographic information obtained from the return routability procedure 501), the correspondent node will register 503 the address in the binding update as the new care-of the address of the mobile node (i.e. updates the binding cache entry for the mobile node's home address so as to point to the new, spoofed care-of address).

In addition to (or instead of ) sending 505 a binding acknowledgment to confirm the registration of the new care-of address to the new care-of address indicated in the authorized binding update, the correspondent node sends 506 a (further) binding acknowledgment to the mobile node's home address so that the binding acknowledgment is routed to the home agent of the mobile node first, which forwards 507 the binding acknowledgement to the mobile node using the care-of address of the mobile node register at the home agent's binding cache (i.e. the actual, non-spoofed care-of address of the mobile node).

Consequently, the mobile node receives a binding acknowledgement although it has not sent the corresponding binding update, which can be interpreted by the mobile node as a successful attack on its binding entry in the correspondent node. More specifically, the mobile node may for example detect 508 an attack on its binding at the correspondent node, when a binding acknowledgement is received with a sequence number that is not within the retransmission window (i.e., higher or by a certain threshold lower than the sequence number) of the last (unacknowledged) binding updates sent to this correspondent node.

It should be further noted that in a variation of the embodiment, the correspondent node could also send a binding acknowledgment to the mobile node's previously registered care-of address (which should be the valid care-of address in case of an attack) in addition to or instead of sending 505, 506 a binding acknowledgment to the mobile node's home address. Also this option would allow the mobile node to recognize the attack on its binding.

If the mobile node detects an attack on its binding, it may take countermeasures to for example repair the binding again. In the exemplary embodiment in Fig. 5, the mobile node performs a return routability procedure 509 including a home test 510 and a care-of test 511 so as to generate new cryptographic information. In one exemplary embodiment, the home test may include sending a home test-init message with a cookie to the correspondent node via the home network (i.e. home agent) and the correspondent node sending a response, a home test message including for example a home keygen token. The home test message is sent via the home agent to the mobile node. Similar thereto, the care-of test may for example include sending a care-of test-init message with a cookie to the correspondent node directly and the correspondent node sending a response, a care-of test message including for example a care-of keygen token.

Using the cryptographic information obtained from the return routability procedure, the mobile node and correspondent node may determine/generate 512, 513 a binding key used for authenticating a subsequent binding update. The steps 512, 513 may be optional. E.g. the return routability procedure could provide the mobile node and correspondent node with cryptographic information which may be directly used in authenticating subsequent messages.

Irrespective of the exact implementation of the return routability procedure 509, the cryptographic information obtained therefrom are subsequently used by the mobile terminal to authenticate the registration 514 of its correct care-of address at the correspondent node to thereby repair the binding and revoke the effect of the detected attack. Subsequently, the packets sent 515 to the mobile node now correctly registered care-of address will be routed to the mobile terminal again.

The retransmission window mentioned above may for example be defined as the window, in which binding acknowledgements can be received for binding update messages that were retransmitted. For instance, if the mobile node sends a binding update with sequence number 11 and no binding acknowledgement with sequence number 11 is received before the retransmission timer at the mobile node expires, the mobile node would send another binding update with a new sequence number (e.g., 12). It is now possible that neither the binding update nor the binding acknowledgement message with sequence number 11 was lost, but instead that they have been delayed by a time longer than the retransmission timer (e.g. due to temporary congestions in the network). In this case, the mobile node receives a delayed binding acknowledgement with a sequence number lower than the current sequence number. The retransmission window may be configured statically or dynamically, so that the mobile node does usually not receive a binding acknowledgement with a sequence number lower than the current sequence number minus the retransmission size. An attack may for example be detected, if a binding acknowledgement is received at the mobile node with a sequence number that is out of the retransmission window, e.g. higher or by a certain threshold lower than the current sequence number.

However, packet loss is a problem for this mechanism. If an attack is successful and binding acknowledgements are only sent as reply to binding update messages and those binding acknowledgements are lost, the attack cannot be detected by the mobile node. Various mechanisms can be used to accommodate such packet loss scenarios. One option would be that the mobile node sends an acknowledgement for binding acknowledgement messages, so that correspondent node is able to detect packet loss and re-send the binding acknowledgement messages.

In another embodiment of the invention, the mobile node checks the correctness of the binding entry in the correspondent node by sending probe messages to the correspondent node, which require a reply from the correspondent node (e.g. similar to an ICMP echo request/response) whereby the response is to be directed to the mobile node's care-of address registered at the correspondent node. In one variation of the embodiment, the correspondent node always uses the care-of address registered in the binding cache as a destination for its response, irrespective of whether the probe messages are received via the mobile node's home network (i.e. from the home agent) or the mobile node directly. These probe messages could be sent once, periodically or occasionally, e.g. when no data has been received by the correspondent node for a certain amount of time. The probe messages may be tunneled over the home agent, so that they have mobile node's home address as source address and the correspondent node must use the binding cache entry for the reply. Another option would be to send the probe messages directly from the mobile node to the correspondent node. If no reply to the probe message(s) is received after multiple replies, the mobile node may interpret this as an indication for a successful attack.

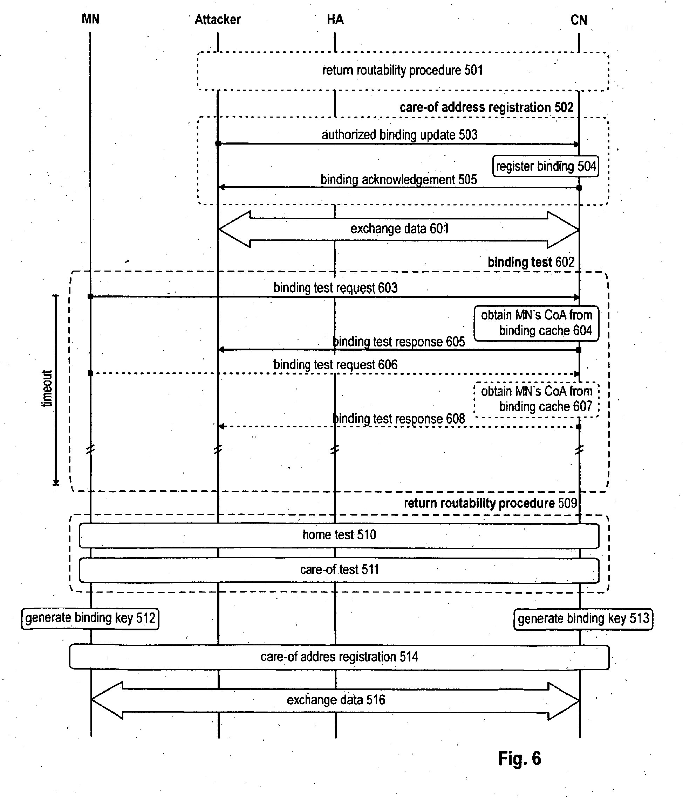

Fig. 6 shows an exemplary sequence of messages exchanged between an attacker, a mobile node, a correspondent node and a home agent allowing the mobile node to detect an attack on its binding at the correspondent node based on a binding test according to an exemplary embodiment of the invention. For exemplary purposes it is assumed that mobile node and correspondent node use route optimization for exchanging data packets.

As in the example shown in Fig. 5, also in this embodiment of the invention it is assumed for exemplary purposes only that the attacker launches an address stealing or impersonation attack. Accordingly the attacker first performs a return routability procedure 501 and subsequently registers 502, 503, 504, 505 its address at the correspondent node. As these steps are similar to those of Fig. 5, it is referred to the description of Fig. 5 for further details. Accordingly, all data from the correspondent node destined to the spoofed mobile node's care-of address will be provided 601 to the attacker's address upon its registration as the new care-of address of the mobile node in the binding cache of the correspondent node.

It should be noted that unlike in Fig. 5, it is not required in this exemplary embodiment that the correspondent node does not need to send a binding update to the mobile node's home address or previously registered care-of address, as a binding test mechanism is used to detect an attacker. However, in another embodiment, the mechanisms for detecting an attacker based on binding acknowledgments and using a binding test could be advantageously used in combination as well.

Returning to the binding test 602 proposed in this embodiment, same may for example be based on a request-response scheme, for example using a similar mechanism as an ICMP echo/response mechanism. The mobile node may send 603 a binding test request message to the correspondent node. In the example shown in Fig. 6, the binding test request is transmitted to the correspondent node directly. Optionally, the mobile node may reverse tunnel the binding test request to its home agent, which forwards the binding test request to the correspondent node. In any case, the correspondent node will respond to this request by sending 605 a binding test response message. This message is directed to the currently registered care-of address of the requesting mobile node, which is obtained 604 from the correspondent node's binding cache. Assuming that the mobile node's binding at the correspondent node has been spoofed by an attacker, the binding test response to the binding test request from the mobile terminal is destined to the spoofed care-of address, i.e. the attacker in this example.

Optionally, the mobile node could send more than one binding test request message to verify its binding cache entry at the correspondent node. This is illustrated by the dotted messages 606, 608 and dotted functional block 607 in Fig. 6.

The mobile node may start a timer upon for a binding test message and upon one or more binding request messages have timed out (i.e. no response has been received within a threshold time period), the mobile node may consider this circumstance as a corruption of its binding at the correspondent node. Hence, similar to the situation in Fig. 5, the mobile node may take appropriate countermeasures, e.g. by performing a full return routability test 509 including a home test 510 and a care-of test 511, optionally generating 512, 513 binding keys at mobile node and correspondent node and registering 514 the correct care-of address of the mobile node again to repair the spoofed binding.

In the embodiments described with respect to Fig. 6 above, it has been assumed for exemplary purposes that the binding test response is sent by the correspondent node in response to a corresponding request from the mobile node - i.e. is a solicited response message. In a further embodiment of the invention the correspondent node may send unsolicited alive messages. These alive messages could be for example sent by the correspondent node periodically or occasionally (e.g., when no data has been sent by the correspondent node to the mobile node for a certain amount of time) and are destined to the current care-of address of the mobile node registered in the binding cache of the correspondent node. In one exemplary embodiment, the unsolicited alive messages are binding acknowledgement messages. If no data and/or no unsolicited alive message(s) are received for multiple threshold time periods, the mobile node may interprets this as an indication for a successful attack. Essentially, the binding test using unsolicited alive messages is similar to the mechanism shown in Fig. 6. In contrast thereto, the mobile node does not send binding test requests (steps 603, 606) and may restart a timer upon having either received a data packet from the correspondent node destined to its care-of address or upon reception of an unsolicited alive message. Further, the binding test response messages 605, 608 may be considered unsolicited alive messages in this case.

The detection mechanisms according to the different embodiments outlined above may be used in addition to existing binding procedures to make them more secure. For example, the new mechanisms could allow the mobile node to detect an on-path attack in the standard return routability procedure/route optimization mode or to cover unlikely attacks like spoofing cryptographically generated address addresses. In the latter case, an attacker would perform a brute-force attack to calculate a public key that generates an existing cryptographically generated address. Depending on the security parameter used for generating the cryptographically generated address, the effort needed for such a brute-force attack may be in realistic bounds. With the detection mechanisms proposed herein, such attack may be detected and actions can be triggered to revoke the effects.

Further, the detection mechanisms proposed herein may be also used to optimize the binding procedures (including a return routability procedure) in a way that does not prevent all attacks in the first place, but reduces signaling overhead and handover delay. If the mobile node detects an attack, it immediately undertakes some actions to revoke the effects of the attack.

Such actions could be to repair the binding cache entry at the correspondent node by initiating a new correspondent registration including a full return routability procedure as exemplified above.

Another additional or alternative countermeasure besides repairing a spoofed binding may be to inform the correspondent node about the attack. In response to the notification on an attack, the correspondent node may for example stop using route optimization for the mobile node and/or may block further binding update messages from certain addresses or prefixes. For example, if the attacker redirects the traffic to itself, the spoofed care-of address is actually a valid address of the attacker, so that the correspondent node is aware of the network prefix and address of the attacker.

To avoid that the attacker from spoofs or prevents the notification on an attack being reported to the correspondent node, one embodiment of the invention relates to the mobile node securely informing the correspondent node about the attack. This may be for example implemented by the by sending a notification message that is signed by the mobile node with a new generated cryptographic information (e.g. binding key). Alternatively, if a trust relationship (or security association) between correspondent node and home agent exist, the mobile node also send the notification via the home agent to the correspondent node. The home agent may sign the message with a key which allows the correspondent node to verify whether the notification has been routed over the home agent. Since there is typically a security association provided between mobile node and home agent, this procedure may secure authenticity of the notification on the attack.

Another aspect of the invention is to enable maintaining communication between mobile node and correspondent node throughout a session including one or more changes of the mobile node's care-of address and using route optimization also in cases where the home agent is (temporarily) not reachable. Especially in cases, where the home agent is required to participate in a return routability procedure to provide the mobile node with cryptographic information for authenticating a new binding, the outage of the mobile node's home agent may lead to an interruption or termination of a session/service.

Hence, another embodiment of the invention relates to providing optimized procedures for an authorized care-of address registration that does not entirely depend on the reachability of a mobile node's home agent.

In one exemplary embodiment of the invention improvements to the return routability procedure and the care-of address registration are proposed.

According to this embodiment, the return routability procedure and subsequent care-of address registration may be enhanced so that home address tests may be omitted. Since a general omission of the home address test may allow for impersonation attacks in certain scenarios, some embodiments of the invention described herein suggest performing an initial home address test. In a further embodiment of the invention one ore more of the different mechanisms for detecting a spoofed binding cache entry at the correspondent node may be used to detect a time shifting attack and revoke its effects.

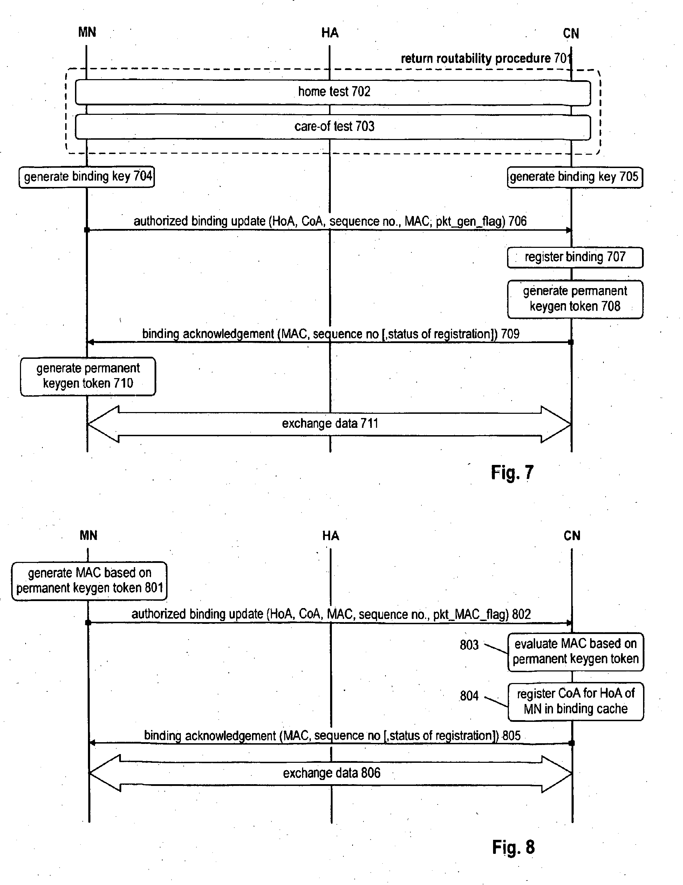

The improvements to the return routability procedure and subsequent care-of address registration according to one exemplary embodiment will be outlined with respect to Fig. 7 in the following. Fig. 7 shows an exemplary sequence of messages exchanged between a mobile node, a correspondent node and a home agent according to an improved return routability procedure and subsequent care-of address registration according to an exemplary embodiment of the invention.

Initially, the mobile node performs 701 the (full) return routability procedure including a home test 702 and a care-of test 703. In one example, this return routability procedure is similar to the one proposed in IETF RFC 3775. According to the cryptographic information exchanged in this procedure, the mobile node and the correspondent node may generate 704, 705 a binding key, respectively.

Subsequently, the mobile terminal starts the care-of address registration. The mobile terminal sends 706 an authorized binding update to the correspondent node. Generally, an authorized binding update may for example include the mobile node's home address to indicate for which home address (i.e. for which mobile node or interface thereof) a binding cache entry should be generated or changed in the binding cache of the correspondent node, and the new care-of address to be registered. Further, the authorized binding update may for example include a sequence number so as to allow an association of the binding update to a binding acknowledgment. To authenticate the sender of the binding update, the mobile node may for example include a message authentication code to the binding update, which is generated based on the cryptographic information obtained in the return routability procedure, e.g. the binding key.

If the mobile node wants to omit a home address test in subsequent return routability rounds (which may be referred to as "optimistic return routability rounds"), it may set a flag (pkt_gen_flag) in the authorized binding update that - when set - indicates to the correspondent node to generate a permanent keygen token to be used in subsequent optimistic return routability rounds. If the binding update message authentication code (MAC) is correct, the correspondent node may register 707 the care-of address of the mobile node indicated in the authorized binding update and may determine/calculate 708 a permanent home keygen token.

For example, the permanent keygen token may be calculated at least based on the home keygen token in the home test message. The home keygen token may be either used as a permanent keygen token. In this case, the home keygen token is reused in subsequent optimistic return routability rounds. The permanent keygen token may be referred to a permanent home keygen token in this case. Alternatively, the correspondent node may calculate the permanent token by other means. In one exemplary embodiment of the invention the permanent keygen token is calculated as follows using a hash function (e.g. SHA1):
permanent keygen token = First (64, SHA1 (Kbm | seqno))
Please note that | denotes a concatenation of the binding key Kbm and the sequence number seqno in the binding update received/sent by the mobile node. First (x, ...) is a function extracting the first x bits from the result of the hash function SHA1 (see for example ) applied to the a concatenation of the binding key Kbm and the sequence number seqno. Please note that the binding key used in this function could be for example the home keygen token obtained from the home test of the return routability procedure, any other or combination of cryptographic information obtained from a return routability procedure including a home test. In one embodiment of the invention, the binding key Kbm is calculated as defined in IETF RFC 3755 mentioned previously herein.

In another embodiment, the care-of keygen token may be included as part of the binding key. This may have the advantage is that an attacker must have received both, the initial home test message and the corresponding care-of test message to calculate the correct permanent keygen token. The permanent token may be stored in the binding cache entry for the mobile node in the correspondent node.

The correspondent node may further send 709 a binding acknowledgement back to the mobile node indicating the successful binding update. Subsequently, the mobile node calculates 710 and stores the permanent home keygen token in the same way the correspondent node did, so that both, mobile node and correspondent node have generated and stored corresponding permanent tokens. Both nodes may assign a finite lifetime to the token, which may be pre-determined or negotiated. Moreover, this lifetime may be significantly larger than 7 minutes.

Having successfully registered the new binding for the mobile node at the mobile node and the correspondent node may exchange 711 data packets using the updated care-of address of the mobile node.

Upon having generated a permanent token at mobile node and correspondent node as exemplified above, this permanent token may be utilized for subsequent care-of address registrations of the mobile node, or more specifically for authentication of subsequent binding updates transmitted from the mobile node. Subsequent registrations of a care-of address may thus no longer utilize a home-test. In some embodiments even no care-of test is used. This may for example reduce the signaling required for registering a care-of address of a mobile node at the correspondent node and/or allows for a care-of address registration and thus the use of route optimization even in case the home agent serving the mobile node (or more specifically, serving the mobile node for one or more of its interfaces) is down, e.g. due to failure, attack, network congestion, or the like.

Fig. 8 shows a sequence of steps and messages exchanged between a mobile node and a correspondent node for registering a care-of address of the correspondent node according to an exemplary embodiment of the invention where a permanent token is used for authentication. Upon having been assigned or generated a new care-of address by the mobile node, e.g. due to attaching to a new network or another administrative domain of an network using another prefix, the mobile node prepares for registering its new care-of address at the correspondent node. In this embodiment, no home test or care-of test is performed. Instead, the mobile node uses a permanent keygen token known to mobile node and correspondent node for authenticating the registration. Accordingly, the mobile node calculates 801 a message authentication code for inclusion to the binding update so as to authenticate the message content. Thereby the permanent keygen token is used to generate the message authentication code (MAC).

In one example, the message authentication code may be determined as follows:
- MAC =: First (96, HMAC_SHA1 (permanent keygen token, (care-of address | correspondent node address | Binding Update)))

The message authentication code may thus be formed by the first 96 (or alternatively another number - e.g. 128, 64, 48, etc. - of) bits of the result of the hash function applied HMAC_SHA1 using the permanent keygen token as a key on a message formed by a concatenation of the (new) mobile node's care-of address to be registered, the correspondent node address and the binding update message.

Subsequently, an authorized binding update including the care-of address to register, the home address of the mobile node, and the MAC is transmitted 802 to the correspondent node. For informing the correspondent node that the binding update has been authorized using a permanent keygen token, the binding update may further comprise a flag (pkt_MAC_flag) that when set indicates to the correspondent node to evaluate 803 the MAC (i.e. to authenticate the binding update message) using the permanent keygen token. Further, the binding update may also comprise a sequence number (sequence no.) that could be for example used for associating a binding update to a binding acknowledgement.

Upon having authenticated 803 the binding update at the correspondent node, same may register 804 the care-of address in its binding cache. Further, the correspondent node may acknowledge the registration by sending 805 a binding acknowledgement to the mobile node. This binding acknowledgement may for example comprise a message authentication code generated by the correspondent node. The MAC in the binding acknowledgement may for example be determined in a similar fashion as the MAC for the binding update, taking into account that the hash function is applies over the binding acknowledgement message instead of the binding update message and (optionally) that the mobile node's care-of address or home address is used instead of the correspondent node's address.

Further, the binding acknowledgement may for example comprise a sequence number (e.g. equal to that in the binding update) to indicate to the mobile node for which binding update the acknowledgement is sent. Moreover, also optionally, the binding acknowledgement may further comprise an indication of the status of the registration, i.e. whether the binding update could be successfully authorized based on the permanent keygen token and/or the registration of the care-of address has been successful.

If the registration of the care-of address has been successful, mobile node and correspondent node continue 806 communication using route optimization.

One potential drawback of the procedure described with respect to Fig. 8 above is that the procedure may be susceptible to attacks especially an address stealing/Impersonation attack to eavesdrop or tamper the data destined to the mobile node, since no home test is performed. This may be particularly problematic if an attacker has eavesdropped the communication between mobile node and correspondent node and has thereby obtained knowledge of the permanent keygen token so that the attacker could spoof the mobile node's binding without requiring eavesdropping traffic destined to the mobile node's home address. Accordingly, according to another embodiment of the invention the procedure according to Fig. 8 may be improved by using one or more of the above described mechanisms for detecting a spoofed binding update.

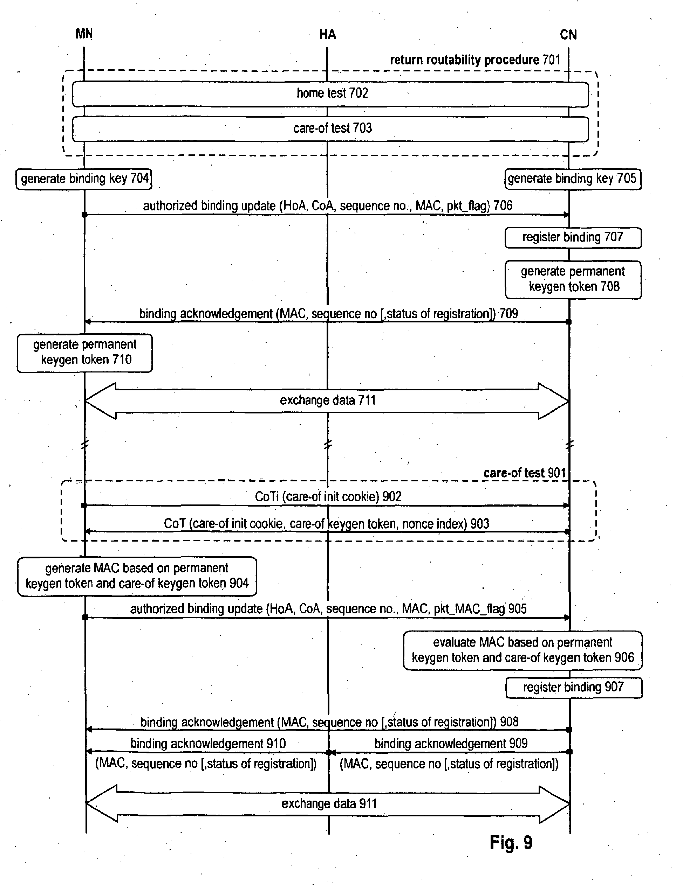

Fig. 9 exemplifies another sequence of steps and messages exchanged between a mobile node, home agent and a correspondent node for registering a care-of address of the correspondent node according to an exemplary embodiment of the invention where a permanent token is used for authentication.

Similar to Fig. 7 the mobile node first registers a care-of address at the correspondent node. A full return routability procedure 701 including a home test 702 and a care-of test 703 is performed, a binding key is generated 704, 705 for authenticating the subsequently sent 705 binding update. The correspondent node registers 707 the care-of address, and due to the pkt_flag being set generates 708 a permanent keygen token as explained previously herein. Also the mobile node generates 710 the permanent keygen token in response to the acknowledgment received 709 from the correspondent node.

Subsequently, when the mobile node is to register a new care-of address at the correspondent node the permanent keygen token may be used in authenticating the messages exchanged between mobile node and correspondent node. In this example, the mobile node and the correspondent node perform a care-of test 901. The mobile node sends 901 a care-of test init message, and receives 903 in response thereto the corresponding care-of test message. Thereby the mobile node is provided with a care-of keygen token (also known to the correspondent node).

In this example, the mobile node next generates 904 the message authentication code for authenticating its binding update to be sent. In this example, it may be assumed that the MAC is generated by the mobile terminal based in a binding key Kbm, which is in turn calculated based on the care-of keygen token of the just received care-of test message and the permanent keygen token obtained from the initial return routability procedure. Performing a care-of test in combination with the care-of address registration procedure and using a permanent keygen token and a care-of keygen token for authentication may be advantageous as flooding attacks may be prevented due to the care-of test.

For example, the MAC may for example be calculated as follows:
- MAC =: First (96, HMAC_SHA1 (Kbm, (care-of address | correspondent node address | Binding Update message)))

This mechanism is similar to the one outlined above, except for using the binding key Kbm instead of the permanent keygen token. Again, taking the first 96 bits of the hash function serves exemplary purposes only.

The binding key Kbm in this example is generated using the care-of keygen token and the permanent keygen token. This could for example be realized as follows:
Kbm = SHA1 (permanent keygen token | care-of keygen token)

Hence, the binding key may be the result of a cryptographic hash function applied to a concatenation of the permanent keygen token and the care-of keygen token.

The resulting message authentication code (MAC) may be included to the binding update as explained with respect to Fig. 8 above and the authorized binding update is sent 905 to the correspondent node. It should be noted that generally the MAC may also be signaled to the correspondent separately from the binding update, e.g. in a separate message. For example, an identifier common to this message and the binding update (e.g. a sequence number) may be used to associate the binding update and the message comprising the MAC for the binding update. Further, the MAC - when sent in a separate message - may be calculated not only based on the binding update but additionally on the separate message (e.g. by using a concatenation of the messages as an input to a hash function).

In order to indicate to the correspondent node that the permanent keygen token has been used for the calculation of the MAC the binding update may include a respective flag, pkt_MAC_flag, indicating the use of the permanent keygen token for the calculation of the MAC to the correspondent node. If the MAC is signaled separate from the binding update the flag would indicate that the correspondent node is to receive a separate message including the MAC for authenticating the binding update.

Similar to the mobile node, if the flag is set, the correspondent node uses the permanent keygen token to calculate the binding key Kbm (if not already present) and verifies 906 the MAC in the binding update message. If the binding update is valid, the correspondent node registers 907 the care-of address in the binding update in its cache. Further, the correspondent node may send 908 a binding acknowledgement to the mobile node's new care-of address as explained previously. In this embodiment the correspondent node (additionally) sends 909, 910 a binding acknowledgement message to the mobile node's home address and/or to the mobile node's old care-of address. Subsequently, the mobile node and the correspondent node may exchange 9011 data using the new registered care-of address.

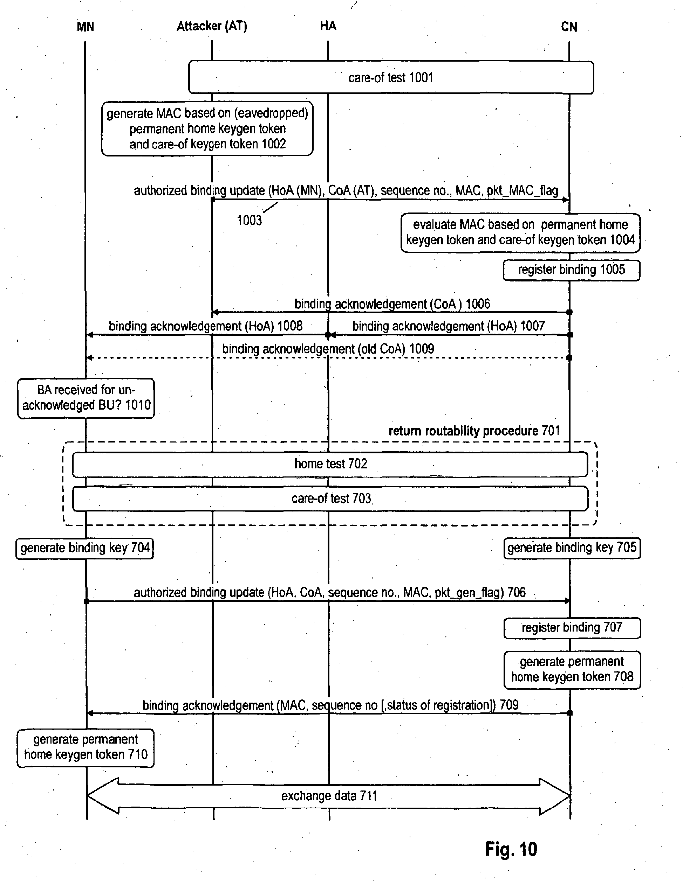

As will be outlined with respect to Fig. 10 below, any of the two latter binding acknowledgement messages (i.e. an acknowledgment destined to the mobile node's home address 909, 910 or an acknowledgement sent to the previously registered care-of address) sent by the corresponding node allow the mobile node to detect an attack.

Fig. 10 shows another sequence of steps and messages exchanged between a mobile node, attacker, home agent and a correspondent node according to an exemplary embodiment of the invention where a permanent token is used for authentication and where a mobile node detects that the attacker has spoofed its binding cache entry the correspondent node. Thereby, the registration of a care-of address does not require a home test to be performed (optionally also the care-of test could be omitted as outlined previously). First, it is assumed that the attacker has gained knowledge of a permanent keygen token or has successfully performed a spoofed care-of address registration for mobile node using a similar method as shown in Fig. 7 so that it possesses a valid home keygen token. Upon having optionally performed 1001 a care-of test with the correspondent node, the attacker generates 1002 a message authentication code based on the (eavesdropped) permanent keygen token and (optionally) the care-of keygen token from the care-of test. The attacker authenticates the binding update sent 1003 to the correspondent node by means of the generated MAC and sets the flag, pkt_MAC-flag, in the binding update to indicate to the correspondent node that the binding update comprises a MAC generated based on a permanent keygen token known to attacker (mobile node) and correspondent node.

The correspondent node evaluates 1004 the MAC and if the evaluation is successful, registers 1005 the care-of address indicated by the attacker in the binding cache. Further, the correspondent node may (optionally) send 1006 a binding acknowledgement to the new care-of address to confirm the binding. To allow the detection of attacks, the correspondent node sends 1007, 1008 a binding update to the home address of the mobile node for which the binding has been updated. Alternatively, or in addition to the binding acknowledgement destined to the mobile node's home address the correspondent node sends 1009 a binding acknowledgement to the care-of address that has been previously registered for the binding cache. This previously registered care-of address corresponds to the up-to-date mobile node's care-of address (if the binding has not been spoofed before).

In case of an impersonation attack, the attacker has sent a binding update message with mobile node's home address to register a care-of address where it is reachable, and the mobile node receives at least one binding acknowledgement message without having sent the corresponding binding update message. As outlined above, the mobile node may for example map 1010 the binding acknowledgement messages to binding update messages by the sequence numbers in the messages. More specifically, the mobile node may for example detect an attack, when a binding acknowledgement is received with a sequence number that is not in the retransmission window (i.e., higher or by a certain threshold lower than the sequence number) of the last binding update sent to this correspondent node. If the mobile node has detected an attack, it may for example immediately revoke the effects of the attack. In Fig. 10, the mobile node initiates a return routability procedure 701 including home test 702 and care-of test 703 and which repairs the binding (704, 705, 706, 707, 709) and may optionally initiate the generation of a new permanent keygen token (708, 710). After these steps that are similar to same of Fig. 7 the correspondent node will destine 711 the data to the correct care-of address of the mobile node.

In the following, a brief analysis the security properties of the optimizations suggested for return routability procedures and care-of address registration procedures will be discussed. As will be shown, same are comparable to the security properties of the standard return routability procedure/route optimization mode known from MIPv6 as provided In IETF RFC 3755.

Off-path attacks are not possible with the return routability procedure using a permanent keygen token as proposed according to some embodiments of the invention if an initial home address test is performed. Only time shifting attacks, i.e., where the attacker is on-path for some time and then moves off-path to continue the attack are possible.

The time shifting attack is more severe in optimistic return routability rounds, since only an initial home test /home test init exchange may be performed in case of optimistic return routability. Consequently, an attacker that is located on the home agent-correspondent node path at the time the mobile node performs the initial full return routability can eavesdrop the home test and can obtain the permanent home keygen token (depending on how the permanent token is calculated, the attacker may have to be located simultaneously on the mobile node-correspondent node path to eavesdrop the care-of test and obtain the care-of keygen token). After obtaining the permanent token, the attacker can move off-path and redirect traffic using optimistic return routability (as explained with respect to Fig. 10 above) given that the attacker must still be reachable at the claimed care-of address due to the care-of address test. However, the mobile node may detect this attack in case of using at least one of detections mechanisms discussed herein, e.g. the due to a received binding acknowledgement for a binding update that has not been sent by the mobile node. This may allow the mobile node to take countermeasures such as repairing the binding by performing a return routability procedure including a home test and a subsequent care-of registration. Consequently, the attacker may not continue its attack off-path, because the permanent keygen token has changed and can only be obtained again by moving back on-path.

It may also happen that the attacker starts a return routability procedure including a home test and care-of test and a subsequent care-of address registration and generates a permanent keygen token while on the path between home agent and correspondent node. In this case the mobile node is not involved in the return routability and may even not notice it. Also, binding acknowledgements to the old care-of address in subsequent optimistic return routability rounds would not reach the mobile node, since the old care-of address has been assigned to the attacker. However, binding acknowledgements destined to the mobile node's home address may still reach the mobile node and may enable the mobile node to detect the attack.

A new threat that may be created by using no return routability procedure or only a care- of test prior to care-of address registration may be that the attacker blocks return routability messages so that the mobile node is not able to repair the binding after a successful attack. To mitigate this threat, another embodiment of the invention suggests that the home test messages (HoTi/HoT) and all signaling messages between mobile node and home agent are encrypted (e.g. using IPsec), so that an attacker can only block all or none of those messages. Since blocking binding acknowledgement messages and IPsec messages from the home agent can be detected by the mobile node (e.g. by means of a IPsec Dead Peer Detection), a mobile node in the process of repairing a binding can interpret this as an indication for blocking return routability messages.

In this case, the mobile node may for example send a message to the correspondent node that asks the correspondent node to require the use return routability procedures with home test and care-of test for generating cryptographic information for authentication of a subsequent care-of address registration. This notification sent to the correspondent node may for example be signed with cryptographic information obtained from a previous return routability procedure performed by mobile node and correspondent node that comprises home test and care-of test (for example a previously generated binding key).

Another potential problem that could be encountered is the attacker continuously performing attacks. In this case a large amount of traffic could be redirected even if the mobile node would continuously detect and repair the binding at the correspondent node. One option for mitigating continuous attack according to an embodiment of the invention may be that the mobile node notifies the correspondent node on the continuous attacks. Such notification may for example be signed with cryptographic information obtained from a previous return routability procedure performed by mobile node and correspondent node that comprises home test and care-of test as mentioned above. The correspondent node may for example maintain a black list of care-of address(es) or care-of address prefixes for which return routability must include a home test and care-of test.

Optimistic return routability rounds may require some additional state information at the correspondent node such as e.g. the permanent keygen token, the maintenance of a black list, etc. However, this state is first established after an authorized binding update has been received by the correspondent node. An attacker might mount a denial of service attack by sending many bogus binding updates with random home addresses and care-of addresses to exhaust the memory of the correspondent node. To mitigate this attack, the correspondent node may for example limit the amount of resources that it uses for processing binding updates.

Reflection attacks with amplification are also not possible, since a victim never receives more messages (even when considering the additional binding acknowledgements) than the attacker has sent.

Another potential drawback of the return routability procedures already discussed above is that they may require participation of the home agent. For example for MIPv6, this means that route optimized communication is not possible, if the mobile node's home agent is down (even though the home agent would not be on the data path of route optimized traffic).

The proposed return routability procedures omitting the home test may in principle get rid of the dependency on the home agent. However, in order to make return routability procedures omitting the home test and subsequent care-of registration secure it is proposes in some embodiments to use mechanisms to detect attacks on a mobile node's binding such as sending a binding acknowledgement to the mobile node's home address. However, binding acknowledgement messages to mobile node's home address cannot reach the mobile node anymore if the home agent is down and hence the mobile node cannot detect address stealing/impersonation attacks during its home agent's down time. This may be a severe threat as the an attacker may for example mount denial of service attacks and force an home agent to go down, or the attacker could monitor home agents and wait with an attack until the home agent becomes unreachable for whatever reason.

One countermeasure to this threat according to an exemplary embodiment of the invention is that the correspondent node sends a binding acknowledgement to the mobile node's old care-of address (i.e. the care-of address previously registered for the mobile node's home address). The correspondent node may either always direct a binding acknowledgement to the mobile node's old care-of address or only in situations where the mobile node's home agent is down.

Another issue might be how correspondent node and mobile node know that the home agent is down. One option is that mobile node detects that the home agent is not reachable based on missing binding acknowledgement messages from the home agent after the mobile node has sent binding update messages. Another option is to detect the outage of the hoe agent using IPsec Dead Peer Detection (DPD), if an IPsec security association exists between mobile node and home agent.

A further option may be to introduce a new periodic message exchange (e.g. ICMP echo request/reply messages) for this purpose. After the mobile node has detected that the home agent is down, the mobile node may inform the correspondent node on the home agent being down by means of a notification message. This message may for example be signed with cryptographic information obtained from a previous return routability procedure performed by mobile node and correspondent node that comprises home test and care-of test (for example a previously generated binding key). In one example, such notification may be included to a binding update message - e.g. by introducing a new flag to the binding update that when being set indicates that the home agent is down ("home agent down" flag).

To prevent an attacker from sending such spoofed notification to the correspondent node, the correspondent node may for example verify that the signature of the notification is valid and that the notification has been sent from the currently registered care-of address of the mobile node. Further, the correspondent node may optionally verify that the home agent is really down, e.g. by sending a request message (e.g. ICMP echo request) to mobile node's home address. If no reply is received after multiple tries, the correspondent node may conclude that the home agent is indeed down.

In case the correspondent node is informed on the home agent of a mobile node being down (and, optionally, upon having confirmed the notification) the correspondent node may for example store this information and switches to a "home agent down mode" where the home test may be skipped and the an acknowledgment of a binding update is sent to the new registered and the previously registered care-of address. Further, the binding update messages may be authorized using a permanent keygen token and optionally cryptographic information obtained from a care-of address test, i.e. no home address test is performed. The permanent keygen token may be for example calculated as described above or may be generated based on or equivalent to the home keygen token of the last successful home address test before the home agent went down.

Consequently, communication between mobile node and correspondent node using route optimization may continue even if the home agent is going down.

In a further embodiment, the correspondent node and/or mobile node may periodically check whether the home agent is still down, e.g. by sending home agent down probe messages to the mobile node's home address (note that the home agent address may not be known by the correspondent node). If the home agent is up again, the correspondent node may send binding acknowledgements via the home agent again in response to an authorized binding update.

To mitigate the problem that an attacker can block the home agent down probe messages in order to cheat the correspondent node that the mobile node's home agent is down although it is not, the home agent may for example intercept the probe messages sent by correspondent node and may reply to them immediately (instead of forwarding them to the mobile node). This may prevent an attacker on the mobile node-home agent path to block those messages.

The mechanism for detecting attacks on a mobile node's binding at a corresponding node as well as the improvements to return routability procedures and care-of address registration procedures as proposed in the various embodiments described herein may be advantageously used for in MIPv6. However, the principles and ideas outlined herein may also be applied to any protocol that registers bindings between addresses at a network entity and sends acknowledgement messages upon registration messages, e.g., mobike, HIP and their derivates.

In another embodiment of the invention a mobile node that receives a care-of test message from another node without having sent corresponding care-of test init (e.g. this could be detected based on the care-of init cookie) may also use this circumstance as an indication of an attack on its binding at the node and may take appropriate countermeasures as outlined herein. Similarly, a mobile node receiving a home test message without having sent corresponding home test init may consider this event as an indication for an attempt to spoof binding update.

Another embodiment of the invention relates to the implementation of the above described various embodiments using hardware and software. It is recognized that the various embodiments of the invention may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

It should be further noted that the individual features of the different embodiments of the invention may individually or in arbitrary combination be subject matter to another invention.

It would be appreciated by a person skilled in the art that numerous variations and/or modifications may be made to the present invention as shown in the specific embodiments without departing from the scope of the invention as defined by the appended claims. The present embodiments are, therefore, to be considered in all respects to be illustrative and not restrictive.

## Claims

1. A method for detecting whether a binding cache entry for a mobile at a correspondent node has been spoofed, wherein the mobile node has at least one home address in its home network and at least one care-of address in a foreign network, the method comprising the following steps:
transmitting from the correspondent node in response to receiving an authorized binding update (503) for updating the mobile node's binding cache entry, at least one binding acknowledgement (505,506) to the mobile node, wherein one binding acknowledgement is destined to the mobile node's home address in its home network and/or one binding acknowledgement (505) is destined to a mobile node's care-of address having been deregistered by the authorized binding update,
receiving at the mobile node the at least one binding acknowledgement and
detecting (508) whether a binding cache entry at the correspondent node for the mobile has been spoofed based on the at least one received binding acknowledgment.

2. The method according to claim 1, wherein one further binding acknowledgment is destined to the mobile node's care-of address indicated in the authorized binding update.

3. The method according to claim 1 or 2, wherein the step of detecting whether the binding cache entry for the mobile node at the correspondent node is spoofed includes determining at the mobile node, whether the at least one binding acknowledgment is received for an authorized binding update that has been transmitted by the mobile node.

4. The method according to one of claims 1 to 3, wherein the step of detecting whether the binding cache entry for the mobile node at the correspondent node is spoofed includes determining at the mobile node, whether a sequence number in the at least one received binding acknowledgment matches a sequence number of an unacknowledged authorized binding update.

5. The method according to one of claims 1 to 4, wherein a binding acknowledgement is destined to the mobile node's care-of address deregistered by the authorized binding update in case the home agent where the mobile node has registered the home address is down.

6. The method according to one of claims 1 to 5, further comprising the steps of detecting that the home agent at which the mobile node is registered is down and informing by the mobile node the correspondent node on the home agent being down.

7. A method for detecting whether a binding cache entry for a mobile at a correspondent node has been spoofed, wherein the mobile node has at least one care-of address in a foreign network, the method comprising the following steps:
performing a binding test by transmitting by the correspondent node binding test messages (605) to the mobile node using route optimization *by* addressing the binding test messages (605) to a mobile node's care-of address registered in a binding cache of the correspondent node, and
detecting at the mobile node a spoofed binding cache entry at the correspondent node in response to not receiving binding test messages for a given time period.

8. The method according to claim 7, wherein the mobile node detects that a binding cache entry for the mobile node at the correspondent node has been spoofed, if the mobile node does not receive a binding test message from the correspondent node for a threshold time period.

9. The method according to claim 7 or 8, wherein the binding test messages are unsolicited messages sent by the correspondent node.

10. The method according to one of claims 7 to 9, wherein the binding test messages are transmitted periodically.

11. The method according to one of claims 7 to 10, wherein the binding test messages are transmitted in case the correspondent node temporarily transmits no data packets to the mobile node.

12. The method according to claim 7, wherein the binding test further comprises sending at least one binding test request message from the mobile node to the correspondent node for requesting the correspondent node to transmit the binding test messages.

13. The method according to claim 12, wherein a spoofed binding cache entry at the correspondent node is detected by the mobile node, if no response to one or more binding test messages is received by the mobile node from the correspondent node.

14. The method according to claim 12 or 13, wherein the binding test utilizes messages of the ICMP protocol.

15. The method according to one of claims 7 to 13, wherein the binding test message is a binding acknowledgment message.

16. The method according to one of claims 1 to 15, further comprising the step of performing by the mobile node at least one of the following counter measures in response to detecting a spoofed binding cache entry at the correspondent node:
- performing a return routability procedure with the correspondent node providing cryptographic information to the mobile node and subsequently transmitting an authorized binding update to the correspondent node to correct the spoofed binding cache entry, wherein the authorized binding update is authorized using the cryptographic information obtained by performing the return routability procedure;
- informing the correspondent node on the spoofed binding cache entry;
- using no route optimization in exchanging data between mobile node and correspondent node.

17. The method according to claim 16, wherein the return routability procedure comprises determining a permanent keygen token.

18. The method according to claim 16 or 17, wherein when informing the correspondent node on the spoofed binding cache entry, the correspondent node blocks further binding updates for registering the care-of address in the spoofed binding cache entry and/or blocks further binding updates for registering a care-of address having a prefix similar to that of the care-of address in the spoofed binding cache entry.

19. The method according to one of claims 16 to 18, further comprising the step of authenticating by a home agent of the mobile node a message transmitted from the mobile node via the home agent to the correspondent node for informing the correspondent node on the spoofed binding cache entry.

20. The method according to one of claims 1 to 19, further comprising the step of determining by the mobile node a message authentication code for validating messages exchanged between the mobile node and the correspondent node, wherein the message authentication code is determined based on at least a permanent keygen token determined by the mobile node and the correspondent node.

21. The method according to claim 20, further comprising the step of including the message authentication code to an authorized binding update transmitted to the correspondent node,
wherein the authorized binding update further comprises a flag that, when set, indicates to the correspondent node to validate the message authentication code based on the permanent keygen token.

22. The method according to one of claim 20 or 21, further comprising the step of transmitting from the correspondent node a message comprising a care-of keygen token to the mobile node, wherein the message is destined to the mobile node's care-of address currently registered with the correspondent node, and
wherein the message authentication code determined based on at least the permanent keygen token is determined by the mobile node using the care-of keygen token.

23. The method according to one of claims 1 to 19, further comprising the step of sending an authorized binding update from the mobile node to the correspondent node for registering a care-of address for the mobile node at the correspondent node,
wherein the authorized binding update comprises a message authentication code and a flag that, when set, indicates to the correspondent node to determine a permanent keygen token.

24. The method according to one of claims 20 to 23, wherein the permanent keygen token is of finite validity.

25. The method according to one of claims 20 to 23, wherein the permanent keygen token determined by the correspondent node is identical to a permanent keygen token determined by the mobile node.

26. The method according to one of claims 20 to 23, wherein the determination of the permanent keygen token is based on at least one of a home keygen token being a keygen token provided to the mobile node in a message from the correspondent node destined to the mobile node's home address, and/or a care-of keygen token being a keygen token provided to the mobile node in a message from the correspondent node destined to the mobile node's care-of address.

27. The method according to claim 17 or according to one of claims 20 to 26, wherein the determination of the permanent keygen token is based on at least one keygen token provided by the correspondent node in a home address test and/or care-of address test of a return routability procedure.

28. The method according to one of claims 1 to 27, further comprising the step of determining at the mobile node the message authentication code based on at least one of a home keygen token being a keygen token provided to the mobile node in a message from the correspondent node destined to the mobile node's home address, and a care-of keygen token being a keygen token provided to the mobile node in a message from the correspondent node destined to the mobile node's care-of address.

29. The method according to one of claims 1 to 28, further comprising the step of determining a permanent keygen token at the mobile node and/or the correspondent node.

30. The method according to claim 29, wherein the permanent keygen token is determined at the mobile node in response to receiving at least one binding acknowledgment for an authorized binding update from the mobile node.

31. The method according to claim 29 or 30, wherein the permanent keygen token is determined at the correspondent node in response to receiving an authorized binding update from the mobile node, wherein the authorized binding update comprises a flag that, when set, indicates to the correspondent node to determine a permanent keygen token.

32. A mobile node for detecting whether a binding cache entry for the mobile node at a correspondent node has been spoofed, wherein the mobile node is assigned at least one home address in its home network and at least one care-of address in a foreign network, the mobile node comprising:
a receiver for receiving at least one binding acknowledgement sent by the correspondent node, wherein one binding acknowledgement is destined to the mobile node's home address in its home network and/or one binding acknowledgement is destined to a mobile node's care-of address having been deregistered from a binding cache of the correspondent node by an authorized binding update,
a processing unit for detecting whether a binding cache entry at the correspondent node for the mobile has been spoofed based on the at least one received binding acknowledgment.

33. A correspondent node for maintaining a binding cache entry for a mobile node, wherein the mobile node is assigned at least one home address in its home network and at least one care-of address in a foreign network, the correspondent node comprising:
a communication unit for transmitting in response to receiving an authorized binding update, at least one binding acknowledgement to the mobile node, wherein one binding acknowledgement is destined to the mobile node's home address in its home network and/or one binding acknowledgement is destined to a mobile node's care-of address having been deregistered by the authorized binding update.

34. A mobile node for detecting whether a binding cache entry for the mobile node at a correspondent node has been spoofed, wherein the mobile node is assigned at least one care-of address in a foreign network, the mobile node comprising:
a communication means for performing a binding test including receiving from the correspondent node binding test messages that have been sent using route optimization by addressing the binding test messages to a care-of address of the mobile node registered in a binding cache of the correspondent node, and
a processing unit for detecting a spoofed binding cache entry at the correspondent node in response to not receiving binding test messages for a given time period.

35. A mobile communication system comprising a mobile node according to claim 32 or 34 and a correspondent node according to claim 33.

36. A computer readable medium storing instructions that, when executed by a processor of a mobile node, cause the mobile node to detect whether a binding cache entry for the mobile node at a correspondent node has been spoofed, wherein the mobile node is assigned at least one home address in its home network and at least one care-of address in a foreign network, by:
receiving at least one of at least one binding acknowledgement sent by the correspondent node, wherein one binding acknowledgement is destined to the mobile node's home address in its home network and/or one binding acknowledgement is destined to a mobile node's care-of address having been deregistered from a binding cache of the correspondent node by an authorized binding update, and
detecting whether a binding cache entry at the correspondent node for the mobile has been spoofed based on the at least one received binding acknowledgment.

37. A computer readable medium storing instructions that, when executed by a processor of a correspondent node, cause the correspondent node to maintain a binding cache entry for a mobile node, wherein the mobile node is assigned at least one home address in its home network and at least one care-of address in a foreign network, by:
transmitting in response to receiving an authorized binding update, at least one binding acknowledgements to the mobile node, wherein one binding acknowledgement is destined to the mobile node's home address in its home network and/or one binding acknowledgement is destined to a mobile node's care-of address having been deregistered from a binding cache of the correspondent node by the authorized binding update.

38. A computer readable medium storing instructions that, when executed by a processor of a mobile node, cause the mobile node to detect whether a binding cache entry for the mobile node at a correspondent node has been spoofed, wherein the mobile node is assigned at least one care-of address in a foreign network, by:
performing a binding test including receiving from the correspondent node binding test messages using route optimization by addressing the binding test messages to a mobile node's care-of address registered in a binding cache of the correspondent, and
detecting at the mobile node a spoofed binding cache entry at the correspondent node in response to not receiving binding test messages for a given time period.

## Patentansprüche

1. Verfahren, mit dem erfasst wird, ob ein Binding-Cache-Eintrag für einen mobilen Knoten an einem korrespondierenden Knoten manipuliert (spoofed) worden ist, wobei der mobile Knoten wenigstens eine Home-Adresse in seinem Home-Netzwerk und wenigstens eine Care-of-Adresse in einem Fremd-Netzwerk hat und das Verfahren die folgenden Schritte umfasst:
Senden wenigstens einer Binding-Quittung (505, 506) zu dem mobilen Knoten von dem korrespondierenden Knoten in Reaktion auf Empfang eines autorisierten Binding-Update (503) zum Aktualisieren des Binding-Cache-Eintrags des mobilen Knotens, wobei eine Binding-Quittung an die Home-Adresse des mobilen Knotens in seinem Home-Netzwerk gerichtet ist und/oder eine Binding-Quittung (505) an eine Care-of-Adresse des mobilen Knotens gerichtet ist, die durch das autorisierte Binding-Update abgemeldet worden ist,
Empfangen der wenigstens einen Binding-Quittung an dem mobilen Knoten, und
Erfassen (508), ob ein Binding-Cache-Eintrag für den mobilen Knoten an dem korrespondierenden Knoten manipuliert worden ist, auf Basis der wenigstens einen empfangenen Binding-Quittung.

2. Verfahren nach Anspruch 1, wobei eine weitere Binding-Quittung an die in dem autorisierten Binding-Update angegebene Care-of-Adresse des mobilen Knotens gerichtet ist.

3. Verfahren nach Anspruch 1 oder 2, wobei der Schritt, in dem erfasst wird, ob der Binding-Cache-Eintrag für den mobilen Knoten an dem korrespondierenden Knoten manipuliert ist, einschließt, dass an dem mobilen Knoten festgestellt wird, ob die wenigstens eine Binding-Quittung für ein autorisiertes Binding-Update empfangen wird, das von dem mobilen Knoten gesendet worden ist.

4. Verfahren nach einem der Ansprüche 1 bis 3, wobei der Schritt, in dem erfasst wird, ob der Binding-Cache-Eintrag für den mobilen Knoten an dem korrespondierenden Knoten manipuliert ist, einschließt, dass an dem mobilen Knoten festgestellt wird, ob eine Sequenznummer in der wenigstens einen empfangenen Binding-Quittung einer Sequenznummer eines nicht-quittierten, autorisierten Binding-Update entspricht.

5. Verfahren nach einem der Ansprüche 1 bis 4, wobei eine Binding-Quittung an die durch das autorisierte Binding-Update abgemeldete Care-of-Adresse des mobilen Knotens gerichtet wird, wenn der Home-Agent, bei dem der mobile Knoten die Home-Adresse angemeldet hat, außer Betrieb ist.

6. Verfahren nach einem der Ansprüche 1 bis 5, das des Weiteren die Schritte umfasst, in denen erfasst wird, dass der Home-Agent, bei dem der mobile Knoten angemeldet ist, außer Betrieb ist, und der korrespondierende Knoten durch den mobilen Knoten darüber informiert wird, dass der Home-Agent außer Betrieb ist.

7. Verfahren, mit dem erfasst wird, ob ein Binding-Cache-Eintrag für einen mobilen Knoten an einem korrespondierenden Knoten manipuliert (spoofed) worden ist, wobei der mobile Knoten wenigstens eine Care-of-Adresse in einem Fremd-Netzwerk hat und das Verfahren die folgenden Schritte umfasst:
Durchführen eines Binding-Tests, indem durch den korrespondierenden Knoten Binding-Testnachrichten (605) unter Verwendung von Routen-Optimierung zu dem mobilen Knoten gesendet werden, indem die Binding-Testnachrichten (605) an eine Care-of-Adresse des mobilen Knotens adressiert werden, die in einem Binding-Cache des korrespondierenden Knotens angemeldet ist, und
Erfassen eines manipulierten Binding-Cache-Eintrags an dem korrespondierenden Knoten in Reaktion darauf, dass über einen bestimmten Zeitraum keine Binding-Testnachrichten empfangen werden, an dem mobilen Knoten.

8. Verfahren nach Anspruch 7, wobei der mobile Knoten erfasst, dass ein Binding-Cache-Eintrag für den mobilen Knoten an dem korrespondierenden Knoten manipuliert worden ist, wenn der mobile Knoten über einen Schwellen-Zeitraum keine Binding-Testnachricht von dem korrespondierenden Knoten empfängt.

9. Verfahren nach Anspruch 7 oder 8, wobei die Binding-Testnachrichten von dem korrespondierenden Knoten gesendete, nicht angeforderte Nachrichten sind.

10. Verfahren nach einem der Ansprüche 7 bis 9, wobei die Binding-Testnachrichten periodisch gesendet werden.

11. Verfahren nach einem der Ansprüche 7 bis 10, wobei die Binding-Testnachrichten dann gesendet werden, wenn der korrespondierende Knoten vorübergehend keine Datenpakete zu dem mobilen Knoten sendet.

12. Verfahren nach Anspruch 7, wobei der Binding-Test des Weiteren umfasst, dass wenigstens eine Binding-Test-Anforderungsnachricht von dem mobilen Knoten zu dem korrespondierenden Knoten gesendet wird, mit der der korrespondierende Knoten aufgefordert wird, die Binding-Testnachrichten zu senden.

13. Verfahren nach Anspruch 12, wobei ein manipulierter Binding-Cache-Eintrag an dem korrespondierenden Knoten durch den mobilen Knoten erfasst wird, wenn durch den mobilen Knoten von dem korrespondierenden Knoten keine Antwort auf eine oder mehrere Binding-Testnachricht/en empfangen wird.

14. Verfahren nach Anspruch 12 oder 13, wobei für den Binding-Test Nachrichten des ICMP-Protokolls verwendet werden.

15. Verfahren nach einem der Ansprüche 7 bis 13, wobei die Binding-Testnachricht eine Binding-Quittierungsnachricht ist.

16. Verfahren nach einem der Ansprüche 1 bis 15, das des Weiteren den Schritt umfasst, in dem durch den mobilen Knoten in Reaktion auf das Erfassen eines manipulierten Binding-Cache-Eintrags an dem korrespondierenden Knoten wenigstens eine der folgenden Gegenmaßnahmen ergriffen wird:
Durchführen einer Return Routability Procedure mit dem korrespondierenden Knoten, mit der dem mobilen Knoten kryptografische Informationen bereitgestellt werden, und anschließend Senden eines autorisierten Binding-Update zu dem korrespondierenden Knoten, um den manipulierten Binding-Cache-Eintrag zu korrigieren, wobei das autorisierte Binding-Update unter Verwendung der kryptografischen Informationen autorisiert wird, die gewonnen werden, indem die Return Routability Procedure durchgeführt wird;
Informieren des korrespondierenden Knotens über den manipulierten Binding-Cache-Eintrag;
Austauschen von Daten zwischen mobilem Knoten und korrespondierendem Knoten ohne Einsatz von Routen-Optimierung.

17. Verfahren nach Anspruch 16, wobei die Return Routability Procedure Bestimmen eines permanenten Keygen-Token umfasst.

18. Verfahren nach Anspruch 16 oder 17, wobei, wenn der korrespondierende Knoten über den manipulierten Binding-Cache-Eintrag informiert wird, der korrespondierende Knoten weitere Binding-Updates zum Anmelden der Care-of-Adresse in dem manipulierten Binding-Cache-Eintrag verhindert und/oder weitere Binding-Updates zum Anmelden einer Care-of-Adresse mit einem Präfix verhindert, das dem der Care-of-Adresse in dem manipulierten Binding-Cache-Eintrag gleicht.

19. Verfahren nach einem der Ansprüche 16 bis 18, das des Weiteren den Schritt des Authentifizierens einer Nachricht durch einen Home-Agent des mobilen Knotens umfasst, die von dem mobilen Knoten über den Home-Agent zu dem korrespondierenden Knoten gesendet wird, um den korrespondierenden Knoten über den manipulierten Binding-Cache-Eintrag zu informieren.

20. Verfahren nach einem der Ansprüche 1 bis 19, das des Weiteren den Schritt umfasst, in dem durch den mobilen Knoten ein Nachrichten-Authentifizierungs-Code zum Validieren zwischen dem mobilen Knoten und dem korrespondierenden Knoten ausgetauschter Nachrichten bestimmt wird, wobei der Nachrichten-Authentifizierungs-Code auf Basis wenigstens eines durch den mobilen Knoten und den korrespondierenden Knoten bestimmten permanenten Keygen-Token bestimmt wird.

21. Verfahren nach Anspruch 20, das des Weiteren den Schritt des Integrierens des Nachrichten-Authentifizierungs-Codes in ein zu dem korrespondierenden Knoten gesendetes autorisiertes Binding-Update umfasst,
wobei das autorisierte Binding-Update des Weiteren ein Flag umfasst, das, wenn es gesetzt ist, dem korrespondierenden Knoten anzeigt, dass der Nachrichten-Authentifizierungs-Code auf Basis des permanenten Keygen-Token zu validieren ist.

22. Verfahren nach einem der Ansprüche 20 oder 21, das des Weiteren den Schritt umfasst, in dem eine Nachricht, die einen Care-of-Keygen-Token umfasst, von dem korrespondierenden Knoten zu dem mobilen Knoten gesendet wird, wobei die Nachricht an die Care-of-Adresse des mobilen Knotens gerichtet ist, die aktuell bei dem korrespondierenden Knoten angemeldet ist, und
der wenigstens auf Basis des permanenten Keygen-Token bestimmte Nachrichten-Authentifizierungs-Code durch den mobilen Knoten unter Verwendung des Care-of-Keygen-Token bestimmt wird.

23. Verfahren nach einem der Ansprüche 1 bis 19, das des Weiteren den Schritt umfasst, in dem ein autorisiertes Binding-Update von dem mobilen Knoten zu dem korrespondierenden Knoten gesendet wird, um eine Care-of-Adresse für den mobilen Knoten an dem korrespondierenden Knoten anzumelden,
wobei das autorisierte Binding-Update einen Nachrichten-Authentifizierungs-Code und ein Flag umfasst, das, wenn es gesetzt ist, dem korrespondierenden Knoten anzeigt, dass ein permanentes Keygen-Token zu bestimmen ist.

24. Verfahren nach einem der Ansprüche 20 bis 23, wobei das permanente Keygen-Token finite Gültigkeit hat.

25. Verfahren nach einem der Ansprüche 20 bis 23, wobei das durch den korrespondierenden Knoten bestimmte permanente Keygen-Token identisch mit einem durch den mobilen Knoten bestimmten permanenten Keygen-Token ist.

26. Verfahren nach einem der Ansprüche 20 bis 23, wobei die Bestimmung des permanenten Keygen-Token auf wenigstens einem Home-Keygen-Token, das ein Keygen-Token ist, das dem mobilen Knoten in einer Nachricht von dem korrespondierenden Knoten bereitgestellt wird, die an die Home-Adresse des mobilen Knotens gerichtet ist, und/oder auf einem Care-of-Keygen-Token basiert, das ein Keygen-Token ist, das dem mobilen Knoten in einer Nachricht von dem korrespondierenden Knoten bereitgestellt wird, die an die Care-of-Adresse des mobilen Knotens gerichtet ist.

27. Verfahren nach Anspruch 17 oder einem der Ansprüche 20 bis 26, wobei die Bestimmung des permanenten Keygen-Token auf wenigstens einem Keygen-Token basiert, das durch den korrespondierenden Knoten in einem Home-Adress-Test und/oder einem Care-of-Adress-Test einer Return Routability Procedure bereitgestellt wird.

28. Verfahren nach einem der Ansprüche 1 bis 27, das des Weiteren den Schritt umfasst, in dem an dem mobilen Knoten der Nachrichten-Authentifizierungs-Code auf Basis eines Home-Keygen-Token, das ein Keygen-Token ist, das dem mobilen Knoten in einer Nachricht von dem korrespondierenden Knoten bereitgestellt wird, die an die Home-Adresse des mobilen Knotens gerichtet ist, oder/und eines Care-of-Keygen-Token bestimmt wird, das ein Keygen-Token ist, das dem mobilen Knoten in einer Nachricht von dem korrespondierenden Knoten bereitgestellt wird, die an die Care-of-Adresse des mobilen Knotens gerichtet ist.

29. Verfahren nach einem der Ansprüche 1 bis 28, das des Weiteren den Schritt des Bestimmens eines permanenten Keygen-Token an dem mobilen Knoten und/oder dem korrespondierenden Knoten umfasst.

30. Verfahren nach Anspruch 29, wobei das permanente Keygen-Token an dem mobilen Knoten in Reaktion auf Empfangen wenigstens einer Binding-Quittung für ein autorisiertes Binding-Update von dem mobilen Knoten bestimmt wird.

31. Verfahren nach Anspruch 29 oder 30, wobei das permanente Keygen-Token an dem korrespondierenden Knoten in Reaktion auf Empfangen eines autorisierten Binding-Update von dem mobilen Knoten bestimmt wird, und das autorisierte Binding-Update ein Flag umfasst, dass, wenn es gesetzt ist, dem korrespondierenden Knoten anzeigt, dass ein permanentes Keygen-Token zu bestimmen ist.

32. Mobiler Knoten, mit dem erfasst wird, ob ein Binding-Cache-Eintrag für den mobilen Knoten an einem korrespondierenden Knoten manipuliert (spoofed) worden ist, wobei dem mobilen Knoten wenigstens eine Home-Adresse in seinem Home-Netzwerk und wenigstens eine Care-of-Adresse in einem Fremd-Netzwerk zugewiesen sind und der mobile Knoten umfasst:
eine Empfangseinrichtung zum Empfangen wenigstens einer von dem korrespondierenden Knoten gesendeten Binding-Quittung, wobei eine Binding-Quittung an die Home-Adresse des mobilen Knotens in seinem Home-Netzwerk gerichtet ist und/oder eine Binding-Quittung an eine Care-of-Adresse des mobilen Knotens gerichtet ist, die durch ein autorisiertes Binding-Update aus einem Binding-Cache des korrespondierenden Knotens abgemeldet worden ist,
eine Verarbeitungseinheit, mit der auf Basis der wenigstens einen empfangenen Binding-Quittung erfasst wird, ob ein Binding-Cache-Eintrag für den mobilen Knoten an dem korrespondierenden Knoten manipuliert worden ist.

33. Korrespondierender Knoten, mit dem ein Binding-Cache-Eintrag für einen mobilen Knoten geführt wird, wobei dem mobilen Knoten wenigstens eine Home-Adresse in seinem Home-Netzwerk und wenigstens eine Care-of-Adresse in einem Fremd-Netzwerk zugewiesen sind und der korrespondierende Knoten umfasst:
eine Kommunikationseinheit, mit der in Reaktion auf Empfangen eines autorisierten Binding-Update wenigstens eine Binding-Quittung zu dem mobilen Knoten gesendet wird, wobei eine Binding-Quittung an die Home-Adresse des mobilen Knotens in seinem Home-Netzwerk gerichtet ist, und/oder eine Binding-Quittung an eine Care-of-Adresse des mobilen Knotens gerichtet ist, die durch das autorisierte Binding-Update abgemeldet worden ist.

34. Mobiler Knoten, mit dem erfasst wird, ob ein Binding-Cache-Eintrag für den mobilen Knoten an einem korrespondierenden Knoten manipuliert (spoofed) worden ist, wobei dem mobilen Knoten wenigstens eine Care-of-Adresse in einem Fremd-Netzwerk zugewiesen ist und der mobile Knoten umfasst:
eine Kommunikationseinrichtung, mit der ein Binding-Test durchgeführt wird, der einschließt, dass von dem korrespondierenden Knoten Binding-Testnachrichten empfangen werden, die unter Verwendung von Routen-Optimierung gesendet worden sind, indem die Binding-Test-Nachrichten an eine Care-of-Adresse des mobilen Knotens adressiert werden, die in einem Binding-Cache des korrespondierenden Knotens angemeldet ist, und
eine Verarbeitungseinheit, mit der ein manipulierter Binding-Cache-Eintrag an dem korrespondierenden Knoten in Reaktion darauf erfasst wird, dass über einen bestimmten Zeitraum keine Binding-Test-Nachrichten empfangen werden.

35. Mobilkommunikationssystem, das einen mobilen Knoten nach Anspruch 32 oder 34 und einen korrespondierenden Knoten nach Anspruch 33 umfasst.

36. Computerlesbares Medium, das Befehle speichert, die, wenn sie von einem Prozessor eines mobilen Knotens ausgeführt werden, den mobilen Knoten veranlassen, zu erfassen, ob ein Binding-Cache-Eintrag für den mobilen Knoten an einem korrespondierenden Knoten manipuliert (spoofed) worden ist, wobei dem mobilen Knoten wenigstens eine Home-Adresse in seinem Home-Netzwerk und wenigstens eine Care-of-Adresse in einem Fremd-Netzwerk zugewiesen sind, indem:
wenigstens eine von wenigstens einer von dem korrespondierenden Knoten gesendeten Binding-Quittung empfangen wird, wobei eine Binding-Quittung an die Home-Adresse des mobilen Knotens in seinem Home-Netzwerk gerichtet ist, und/oder eine Binding-Quittung an eine Care-of-Adresse des mobilen Knotens gerichtet ist, die durch ein autorisiertes Binding-Update aus einem Binding-Cache des korrespondierenden Knotens abgemeldet worden ist, und
auf Basis der wenigstens einen empfangenen Binding-Quittung erfasst wird, ob ein Binding-Cache-Eintrag für den mobilen Knoten an dem korrespondierenden Knoten manipuliert worden ist.

37. Computerlesbares Medium, das Befehle speichert, die, wenn sie von einem Prozessor eines korrespondierenden Knotens ausgeführt werden, den korrespondierenden Knoten veranlassen, einen Binding-Cache-Eintrag für einen mobilen Knoten zu führen, wobei dem mobilen Knoten wenigstens eine Home-Adresse in seinem Home-Netzwerk und wenigstens eine Care-of-Adresse in einem Fremd-Netzwerk zugewiesen sind, indem:
in Reaktion auf Empfangen eines autorisierten Binding-Update wenigstens eine Binding-Quittung zu dem mobilen Knoten gesendet wird, wobei eine Binding-Quittung an die Home-Adresse des mobilen Knotens in seinem Home-Netzwerk gerichtet ist, und/oder eine Binding-Quittung an eine Care-of-Adresse des mobilen Knotens gerichtet ist, die durch das autorisierte Binding-Update aus einem Binding-Cache des korrespondierenden Knotens abgemeldet worden ist.

38. Computerlesbares Medium, das Befehle speichert, die, wenn sie von einem Prozessor eines mobilen Knotens ausgeführt werden, den mobilen Knoten veranlassen, zu erfassen, ob ein Binding-Cache-Eintrag für den mobilen Knoten an einem korrespondierenden Knoten manipuliert (spoofed) worden ist, wobei dem mobilen Knoten wenigstens eine Care-of-Adresse in einem Fremd-Netzwerk zugewiesen ist, indem:
ein Binding-Test durchgeführt wird, der einschließt, dass von dem korrespondierenden Knoten Binding-Testnachrichten unter Verwendung von Routen-Optimierung empfangen werden, indem die Binding-Testnachrichten an eine in einem Binding-Cache des korrespondierenden Knotens registrierte Care-of-Adresse des mobilen Knotens adressiert werden, und
an dem mobilen Knoten ein manipulierter Binding-Cache-Eintrag an dem korrespondierenden Knoten in Reaktion darauf erfasst wird, dass über einen bestimmten Zeitraum keine Binding-Testnachrichten empfangen werden.

## Revendications

1. Procédé de détection du fait qu'une entrée de table d'association pour un noeud mobile à un noeud correspondant a ou non été usurpée, dans lequel le noeud mobile comporte au moins une adresse personnelle dans son réseau personnel et au moins une adresse temporaire dans un réseau étranger, le procédé comprenant les étapes suivantes :
transmission depuis le noeud correspondant, en réponse à la réception d'une mise à jour d'association autorisée (503) pour mettre à jour l'entrée de table d'association du noeud mobile, d'au moins un acquittement d'association (505, 506) au noeud mobile, dans lequel un acquittement d'association est destiné à l'adresse personnelle du noeud mobile dans son réseau personnel et/ou un acquittement d'association (505) est destiné à une adresse temporaire (*care-of address*) du noeud mobile qui a été désenregistrée par la mise à jour d'association autorisée,
réception au noeud mobile dudit au moins un acquittement d'association, et
détection (508) du fait qu'une entrée de table d'association au noeud correspondant pour le noeud mobile a ou non été usurpée sur base dudit au moins un acquittement d'association reçu.

2. Procédé selon la revendication 1, dans lequel un acquittement d'association additionnel est destiné à l'adresse temporaire du noeud mobile indiquée dans la mise à jour d'association autorisée.

3. Procédé selon la revendication 1 ou 2, dans lequel l'étape de détection du fait que l'entrée de table d'association pour le noeud mobile au noeud correspondant est ou non usurpée comprend la détermination, au noeud mobile, du fait qu'au moins un acquittement d'association est reçu ou non pour une mise à jour d'association autorisée qui a été transmise par le noeud mobile.

4. Procédé selon l'une des revendications 1 à 3, dans lequel l'étape de détection du fait que l'entrée de table d'association pour le noeud mobile au noeud correspondant est ou non usurpée comprend la détermination, au noeud mobile, du fait qu'un numéro de séquence dans ledit au moins un acquittement d'association reçu correspond ou non à un numéro de séquence d'une mise à jour d'association autorisée non acquittée.

5. Procédé selon l'une des revendications 1 à 4, dans lequel un acquittement d'association est destiné à l'adresse temporaire du noeud mobile désenregistrée par la mise à jour d'association autorisée dans le cas où l'agent personnel est hors service là où le noeud mobile a enregistré l'adresse personnelle.

6. Procédé selon l'une des revendications 1 à 5, comprenant en outre les étapes de détection du fait que l'agent personnel auprès duquel le noeud mobile est enregistré est hors service, et de notification par le noeud mobile au noeud correspondant que l'agent personnel est hors service.

7. Procédé de détection du fait qu'une entrée de table d'association pour un noeud mobile à un noeud correspondant a ou non été usurpée, dans lequel le noeud mobile comporte au moins une adresse temporaire dans un réseau étranger, le procédé comprenant les étapes suivantes :
mise en oeuvre d'un test d'association via la transmission par le noeud correspondant de messages de test d'association (605) au noeud mobile en utilisant une optimisation de routage, en adressant les messages de test d'association (605) à une adresse temporaire du noeud mobile enregistrée dans une table d'association du noeud correspondant, et
détection au noeud mobile d'une entrée de table d'association usurpée au noeud correspondant en réponse à la non-réception de messages de test d'association durant une période donnée.

8. Procédé selon la revendication 7, dans lequel le noeud mobile détecte qu'une entrée de table d'association pour le noeud mobile au noeud correspondant a été usurpée si le noeud mobile ne reçoit pas un message de test d'association provenant du noeud correspondant durant une période seuil.

9. Procédé selon la revendication 7 ou 8, dans lequel les messages de test d'association sont des messages non sollicités envoyés par le noeud correspondant.

10. Procédé selon l'une des revendications 7 à 9, dans lequel les messages de test d'association sont transmis périodiquement.

11. Procédé selon l'une des revendications 7 à 10, dans lequel les messages de test d'association sont transmis dans le cas où le noeud correspondant ne transmet temporairement aucun paquet de données au noeud mobile.

12. Procédé selon la revendication 7, dans lequel le test d'association comprend en outre l'envoi d'au moins un message de demande de test d'association depuis le noeud mobile vers le noeud correspondant pour demander au noeud correspondant de transmettre les messages de test d'association.

13. Procédé selon la revendication 12, dans lequel une entrée de table d'association usurpée auprès du noeud correspondant est détectée par le noeud mobile si aucune réponse à un ou plusieurs messages de test d'association n'est reçue par le noeud mobile en provenance du noeud correspondant.

14. Procédé selon la revendication 12 ou 13, dans lequel le test d'association utilise des messages du protocole ICMP.

15. Procédé selon l'une quelconque des revendications 7 à 13, dans lequel le message de test d'association est un message d'acquittement d'association.

16. Procédé selon l'une des revendications 1 à 15, comprenant en outre l'étape qui consiste à mettre en oeuvre, par le noeud mobile, au moins une des contre-mesures suivantes en réponse à la détection d'une entrée de table d'association usurpée au noeud correspondant :
- mise en oeuvre d'une procédure de capacité de routage de retour avec le noeud correspondant, procurant de l'information cryptographique au noeud mobile et transmettant ensuite une mise à jour d'association autorisée au noeud correspondant pour corriger l'entrée de table d'association usurpée, dans lequel la mise à jour d'association autorisée est autorisée en utilisant l'information cryptographique obtenue en mettant en oeuvre la procédure de capacité de routage de retour ;
- notification du noeud correspondant concernant l'entrée de table d'association usurpée ;
- non-utilisation d'une optimisation de routage pour l'échange de données entre le noeud mobile et le noeud correspondant.

17. Procédé selon la revendication 16, dans lequel la procédure de capacité de routage de retour comprend la détermination d'un jeton chiffré permanent.

18. Procédé selon la revendication 16 ou 17, dans lequel, lors de la notification du noeud correspondant concernant l'entrée de table d'association usurpée, le noeud correspondant bloque les mises à jour d'association ultérieures pour enregistrer l'adresse temporaire dans l'entrée de table d'association usurpée et/ou bloque les mises à jour d'association ultérieures pour enregistrer une adresse temporaire ayant un préfixe similaire à celui de l'adresse temporaire dans l'entrée de table d'association usurpée.

19. Procédé selon l'une des revendications 16 à 18, comprenant en outre l'étape d'authentification par un agent personnel du noeud mobile d'un message transmis provenant du noeud mobile via l'agent personnel au noeud correspondant pour notifier le noeud correspondant concernant l'entrée de table d'association usurpée.

20. Procédé selon l'une des revendications 1 à 19, comprenant en outre l'étape de détermination par le noeud mobile d'un code d'authentification de message pour valider des messages échangés entre le noeud mobile et le noeud correspondant, dans lequel le code d'authentification de message est déterminé sur base d'au moins un jeton chiffré (*keygen token*) permanent déterminé par le noeud mobile et le noeud correspondant.

21. Procédé selon la revendication 20, comprenant en outre l'étape d'inclusion du code d'authentification de message dans une mise à jour d'association autorisée transmise au noeud correspondant,
dans lequel la mise à jour d'association autorisée comprend en outre un drapeau qui, lorsqu'il est activé, indique au noeud correspondant de valider le code d'authentification de message sur base du jeton chiffré permanent.

22. Procédé selon la revendication 20 ou 21, comprenant en outre l'étape de transmission, du noeud correspondant au noeud mobile, d'un message comprenant un jeton chiffré temporaire (*care-of keygen token*), dans lequel le message est destiné à l'adresse temporaire de noeud mobile actuellement enregistrée après du noeud correspondant, et
dans lequel le code d'authentification de message déterminé sur base au moins du jeton chiffré permanent est déterminé par le noeud mobile en utilisant le jeton chiffré temporaire.

23. Procédé selon l'une des revendications 1 à 19, comprenant en outre l'étape d'envoi d'une mise à jour d'association autorisée depuis le noeud mobile vers le noeud correspondant pour enregistrer une adresse temporaire pour le noeud mobile sur le noeud correspondant,
dans lequel la mise à jour d'association autorisée comprend un code d'authentification de message et un drapeau qui, lorsqu'il est activé, indique au noeud correspondant de déterminer un jeton chiffré permanent.

24. Procédé selon l'une des revendications 20 à 23, dans lequel le jeton chiffré permanent possède une validité finie.

25. Procédé selon l'une des revendications 20 à 23, dans lequel le jeton chiffré permanent déterminé par le noeud correspondant est identique à un jeton chiffré permanent déterminé par le noeud mobile.

26. Procédé selon l'une des revendications 20 à 23, dans lequel la détermination du jeton chiffré permanent est basée sur au moins un fait parmi le fait qu'un jeton chiffré personnel est un jeton chiffré fourni au noeud mobile dans un message provenant du noeud correspondant destiné à l'adresse personnelle du noeud mobile, et/ou le fait qu'un jeton chiffré temporaire est un jeton chiffré fourni au noeud mobile dans un message provenant du noeud correspondant destiné à l'adresse temporaire du noeud mobile.

27. Procédé selon la revendication 17 ou selon l'une des revendications 20 à 26, dans lequel la détermination du jeton chiffré permanent est basée sur au moins un jeton chiffré fourni par le noeud correspondant dans un test d'adresse personnelle et/ou un test d'adresse temporaire d'une procédure de capacité de routage de retour.

28. Procédé selon l'une des revendications 1 à 27, comprenant en outre l'étape de détermination au noeud mobile du code d'authentification de message sur base d'au moins un fait parmi le fait qu'un jeton chiffré personnel est un jeton chiffré fourni au noeud mobile dans un message provenant du noeud correspondant destiné à l'adresse personnelle du noeud mobile, et le fait qu'un jeton chiffré temporaire est un jeton chiffré fourni au noeud mobile dans un message provenant du noeud correspondant destiné à l'adresse temporaire du noeud mobile.

29. Procédé selon l'une des revendications 1 à 28, comprenant en outre l'étape de détermination d'un jeton chiffré permanent au noeud mobile et/ou au noeud correspondant.

30. Procédé selon la revendication 29, dans lequel le eton chiffré permanent est déterminé au noeud mobile en réponse à la réception d'au moins un acquittement d'association pour une mise à jour d'association autorisée provenant du noeud mobile.

31. Procédé selon la revendication 29 ou 30, dans lequel le jeton chiffré permanent est déterminé au noeud correspondant en réponse à la réception d'une mise à jour d'association autorisée provenant du noeud mobile, dans lequel la mise à jour d'association autorisée comprend un drapeau qui, lorsqu'il est activé, indique au noeud correspondant de déterminer un jeton chiffré permanent.

32. Noeud mobile pour détecter si une entrée de table d'association pour le noeud mobile à un noeud correspondant a ou non été usurpée, dans lequel le noeud mobile reçoit au moins une adresse personnelle dans son réseau personnel et au moins une adresse temporaire dans un réseau étranger, le noeud mobile comprenant :
un récepteur pour recevoir au moins un acquittement d'association envoyé par le noeud correspondant, dans lequel un acquittement d'association est destiné à l'adresse personnelle du noeud mobile dans son réseau personnel et/ou un acquittement d'association est destiné à une adresse temporaire du noeud mobile qui a été désenregistrée d'une table d'association du noeud correspondant par une mise à jour d'association autorisée,
une unité de traitement pour détecter si une entrée de table d'association au noeud correspondant pour le noeud mobile a ou non été usurpée sur base dudit au moins un acquittement d'association reçu.

33. Noeud correspondant pour maintenir une entrée de table d'association pour un noeud mobile, dans lequel le noeud mobile reçoit au moins une adresse personnelle dans son réseau personnel et au moins une adresse temporaire dans un réseau étranger, le noeud correspondant comprenant :
une unité de communication pour transmettre, en réponse à la réception d'une mise à jour d'association autorisée, au moins un acquittement d'association au noeud mobile, dans lequel un acquittement d'association est destiné à l'adresse personnelle du noeud mobile dans son réseau personnel et/ou un acquittement d'association est destiné à une adresse temporaire du noeud mobile qui a été désenregistrée par la mise à jour d'association autorisée.

34. Noeud mobile pour détecter si une entrée de table d'association pour le noeud mobile à un noeud correspondant a ou non été usurpée, dans lequel le noeud mobile reçoit au moins une adresse temporaire dans un réseau étranger, le noeud mobile comprenant :
un moyen de communication pour mettre en oeuvre un test d'association comprenant la réception, en provenance du noeud correspondant, de messages de test d'association qui ont été envoyés en utilisant une optimisation de routage en adressant les messages de test d'association à une adresse temporaire du noeud mobile enregistrée dans une table d'association du noeud correspondant, et
une unité de traitement pour détecter une entrée de table d'association usurpée au noeud correspondant en réponse à la non-réception de messages de test d'association durant une période donnée.

35. Système de communication mobile comprenant un noeud mobile selon la revendication 32 ou 34 et un noeud correspondant selon la revendication 33.

36. Support lisible par un ordinateur et stockant des instructions qui, lorsqu'elles sont exécutées par un processeur d'un noeud mobile, commandent au noeud mobile de détecter si une entrée de table d'association pour le noeud mobile à un noeud correspondant a ou non été usurpée, dans lequel le noeud mobile reçoit au moins une adresse personnelle dans son réseau personnel et au moins une adresse temporaire dans un réseau étranger :
en recevant au moins un acquittement d'association envoyé par le noeud correspondant, dans lequel un acquittement d'association est destiné à l'adresse personnelle du noeud mobile dans son réseau personnel et/ou un acquittement d'association est destiné à une adresse temporaire du noeud mobile qui a été désenregistrée d'une table d'association du noeud correspondant par une mise à jour d'association autorisée, et
en détectant si une entrée de table d'association au noeud correspondant pour le noeud mobile a ou non été usurpée sur base dudit au moins un acquittement d'association reçu.

37. Support lisible par un ordinateur et stockant des instructions qui, lorsqu'elles sont exécutées par un processeur d'un noeud correspondant, commandent au noeud correspondant de maintenir une entrée de table d'association pour un noeud mobile, dans lequel le noeud mobile reçoit au moins une adresse personnelle dans son réseau personnel et au moins une adresse temporaire dans un réseau étranger :
en transmettant, en réponse à la réception d'une mise à jour d'association autorisée, au moins un acquittement d'association au noeud mobile, dans lequel un acquittement d'association est destiné à l'adresse personnelle du noeud mobile dans son réseau personnel et/ou un acquittement d'association est destiné à une adresse temporaire du noeud mobile qui a été désenregistrée d'une table d'association du noeud correspondant par une mise à jour d'association autorisée.

38. Support lisible par un ordinateur et stockant des instructions qui, lorsqu'elles sont exécutées par un processeur d'un noeud mobile, commandent au noeud mobile de détecter si une entrée de table d'association pour le noeud mobile à un noeud correspondant a ou non été usurpée, dans lequel le noeud mobile reçoit au moins une adresse temporaire dans un réseau étranger :
en mettant en oeuvre un test d'association comprenant la réception, en provenance du noeud correspondant, de messages de test d'association en utilisant une optimisation de routage, en adressant les messages de test d'association à une adresse temporaire du noeud mobile enregistrée dans une table d'association du noeud correspondant, et
en détectant au noeud mobile une entrée de table d'association usurpée au noeud correspondant en réponse à la non-réception de messages de test d'association durant une période donnée.
